# EUROPEAN PATENT SPECIFICATION

(11) **EP 3 759 960 B1**
(45) Date of publication and mention of the grant of the patent: **21.08.2024**
(21) Application number: 19775489.8
(22) Date of filing: 27.03.2019
(51) Int. Cl.: H04W 24/10, H04W 76/28, H04W 76/27

(54) **METHOD AND DEVICE FOR CSI REPORTING IN DRX MODE IN NEXT GENERATION WIRELESS COMMUNICATION SYSTEM**
VERFAHREN UND VORRICHTUNG ZUR CSI-MELDUNG IN DRX-MODUS IN EINEM DRAHTLOSKOMMUNIKATIONSSYSTEM DER NÄCHSTEN GENERATION
PROCÉDÉ ET DISPOSITIF DE RENSEIGNEMENTS CSI EN MODE DRX DANS UN SYSTÈME DE COMMUNICATION SANS FIL DE NOUVELLE GÉNÉRATION

(30) Priority: 28.03.2018 KR 20180035784
(43) Date of publication of application: 06.01.2021
(73) Proprietor: Samsung Electronics Co., Ltd., Gyeonggi-do 16677 (KR)
(72) Inventor: JIN, Seungri, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2019/003532
(87) International publication number: WO 2019/190180

(56) References cited:
- WO-A2-2011/085230
- US-A1- 2013 114 455
- US-A1- 2017 237 478
- HUAWEI ET AL: "Aperiodic SRS Transmission in Sleep Time", 3GPP DRAFT; R2-111033, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493676
- ERICSSON ET AL: "SRS and DRX", 3GPP DRAFT; R2-110954 SRS AND DRX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493656
- HT MMOBILE INC: "Aperiodic SRS reporting when considering DRX", 3GPP DRAFT; R2-110392, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050493024
- ETSI: "Evolved Universal Terrestrial Radio Access (E-UTRA); Medium Access Control (MAC) protocol specification", 3GPP TS36.321 V9.3.0, 1 June 2010 (2010-06-01), XP055121209, Retrieved from the Internet <URL:http://www.etsi.org/deliver/etsi_ts/136300_136399/136321/09.03.00_60/ts_136321v090300p.pdf> [retrieved on 20140603]
- CATT: "Small Corrections on DRX", R2-1802148, 3GPP TSG-RAN WG2#101, vol. RAN WG2, 14 February 2018 (2018-02-14), Athens, Greece, XP051399144
- ERICSSON: "Introduce feLAA in TS 36.321", R2-1804139, 3GPP TSG-RAN WG2#101, vol. RAN WG2, 20 March 2018 (2018-03-20), Athens, Greece, XP051414571
- 3GPP: "3GPP; TSGRAN; NR; Physical layer procedures for data (Release 15", 3GPP TS 38.214, no. V15.0.0, 3 January 2018 (2018-01-03), pages 1 - 71, XP055625231

## Description

### [Technical Field]

The disclosure relates to a method and a device for reporting a channel state reference signal and a sounding reference signal in a deactivated state in a next generation mobile communication system.

### [Background Art]

Efforts are underway to develop an improved 5G or pre-5G communication system to meet the growing demand for wireless data traffic after commercialization of the 4G communication system. For this reason, the 5G communication system or the pre-5G communication system is referred to as a beyond 4G network communication system or a post Long Term Evolution (post-LTE) system. In order to achieve a high data transmission rate, implementation of the 5G communication system in an ultrahigh-frequency (mmWave) band (e.g., a 60 GHz band) is being considered.

In the 5G communication system, technologies such as beamforming, massive MIMO, Full Dimensional MIMO (FD-MIMO), an array antenna, analog beam-forming, and a large scale antenna are being discussed as means to mitigate a propagation path loss in the mmWave band and increase a propagation transmission distance. Further, in the 5G communication system, technologies, such as an evolved small cell, an advanced small cell, a cloud Radio Access Network (RAN), an ultra-dense network, Device to Device communication (D2D), a wireless backhaul, a moving network, cooperative communication, Coordinated Multi-Points (CoMP), and received interference cancellation, have been developed to improve the system network.

In addition, the 5G Advanced Coding Modulation (ACM) schemes, such as Hybrid FSK and QAM Modulation (FQAM) and Sliding Window Superposition Coding (SWSC), and advanced access technologies, such as Filter Bank Multi Carrier (FBMC), Non Orthogonal Multiple Access (NOMA), and Sparse Code Multiple Access (SCMA), have been developed.

Meanwhile, the Internet has evolved to an Internet of Things (IoT) network in which distributed components, such as objects, exchange and process information from a human-oriented connection network in which humans generate and consume information. Internet of Everything (IoE) technology, in which a big data processing technology through a connection with a cloud server or the like is combined with the IoT technology, has emerged. In order to implement IoT, technical factors, such as a sensing technique, wired/wireless communication, network infrastructure, service-interface technology, and security technology, are required, and research on technologies, such as a sensor network, Machine-to-Machine (M2M) communication, Machine-Type Communication (MTC), and the like for connection between objects, has recently been conducted. In an IoT environment, through collection and analysis of data generated by connected objects, an intelligent Internet Technology (IT) service to create a new value for peoples' lives may be provided. The IoT may be applied to fields, such as those of smart homes, smart buildings, smart cities, smart cars or connected cars, smart grids, health care, smart home appliances, or high-tech medical services, through the convergence of the conventional Information Technology (IT) and various industries.

Accordingly, various attempts have been made to apply the 5G communication system to the IoT network. For example, 5G communication technology, such as a sensor network, Machine-to-Machine (M2M) communication, and Machine-Type Communication (MTC), has been implemented by technique, such as beamforming, MIMO, and array antennas. The application of the cloud radio access network (cloud RAN) as the big data processing technology described above may be an example of the convergence of 5G technology and IoT technology.

WO 2011/085230 A2 discloses a method wherein channel state information is reported in periodic and aperiodic reports for multiple component carriers or serving cells and wherein channel state information may be reported for a subset of aggregated downlink carriers or serving cells.

HUAWEI ET AL: "Aperiodic SRS Transmission in Sleep Time", 3GPP DRAFT; R2-111033, discloses that aperiodic SRS reporting shall be sent as requested by the eNB regardless of the UE's DRX status.

ERICSSON ET AL: "SRS and DRX", 3GPP DRAFT; R2-110954 SRS AND DRX discloses that the UE shall report type-1-triggered SRS if a request for such SRS is received, even if the type-1-triggered SRS resource occurs when the UE is not in active time.

HT MMOBILE INC: "Aperiodic SRS reporting when considering DRX", 3GPP DRAFT; R2-110392, discloses that aperiodic SRS should be reported even if UE is not in active time.

### [Disclosure of Invention]

### [Technical Problem]

In LTE, periodic reference signals are reported only during an activation time. However, in the next generation mobile communication system, a partial periodic reference signal transmission and one-time aperiodic signal transmission are introduced, it is necessary to define a method for reporting measurement values of corresponding reference signals in a deactivated state. It is required to define how to perform reporting when reference signal transmission that has been initiated during the activation time continues even after the activation time is completed.

### [Solution to Problem]

The solution provides reporting a channel state reference signal and a sounding reference signal in a deactivated state in a next generation mobile communication system.

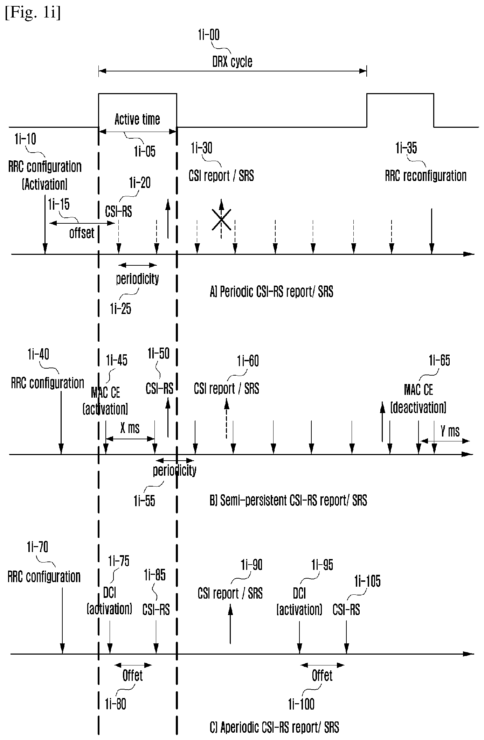

The invention is defined by methods performed by a terminal and a base station in a wireless communication system, a terminal and a base station according to independent claims 1, 4, 7 and 10. Further embodiments are defined by the dependent claims. The invention is implemented as defined by Figures 1I-1L and the corresponding parts of the description. Embodiments not covered by the claims can serve as examples useful for understanding the invention.

### [Advantageous Effects of Invention]

In the disclosure, according to one or more embodiments, in a state where a discontinuous reception period of a deactivated state in a next generation mobile com system is configured, in particular, when transmission of a channel state reference signal and a sounding reference signal has started in an activation period and then transmission of the corresponding reference signals continues even after the activation state, a standard operation may be clarified and the configured reference signals may be reported to a base station in a timely manner by defining the completion of a once-started measurement report on the corresponding reference signals.

In addition, according to one or more embodiments, in radio resource measurement based on an in-frequency synchronization signal defined in the next generation mobile communication system, it is possible to reduce the burden on a terminal to measure all serving calls in the frequency and neighbor cells of corresponding serving cells, by a method for preventing a specific serving cell from performing measurement. Therefore, it is possible to reduce terminal complexity and, particularly, reduce an RF tuning delay time for radio resource measurement and battery consumption.

### [Brief Description of Drawings]

The above and other aspects, features, and advantages of certain embodiments of the present disclosure will be more apparent from the following description taken in conjunction with the accompanying drawings, in which:
FIG. 1A is a diagram illustrating a structure of an LTE system, according to an embodiment;
FIG. 1B is a diagram illustrating a structure of a next generation mobile communication system, according to an embodiment;
FIG. 1C is a diagram illustrating a radio protocol structure of the next generation mobile communication system, according to an embodiment;
FIG. 1D is a diagram describing a DRX operation for an idle terminal, according to an embodiment;
FIG. 1E is a diagram describing a DRX operation for a terminal in an RRC connection state, according to an embodiment;
FIG. 1F is a diagram describing a CSI resource setting method in the next generation mobile communication system, according to an embodiment;
FIG. 1G is a diagram describing a configuration of a CSI resource reporting method in the next generation mobile communication system, according to an embodiment;
FIG. 1H is a diagram describing a triggering state configuration for CSI resource reporting in the next generation mobile communication system, according to an embodiment;
FIG. 1I is a diagram illustrating a method of CSI reporting and transmitting an SRS signal when DRX is configured and applied, according to an embodiment;
FIG. 1J is a diagram illustrating a method of CSI reporting in a state where DRX is configured and applied, according to an embodiment;
FIG. 1K is a diagram illustrating a method of SRS transmission in a state where DRX is configured and applied, according to an embodiment;
FIG. 1L is a diagram illustrating the overall operation of a terminal, according to an embodiment;
FIG. 1M is a block diagram illustrating an internal structure of a terminal, according to an embodiment;
FIG. 1N is a block diagram illustrating a configuration of an NR base station according to an embodiment;
FIG. 2A is a diagram illustrating a structure of an LTE system, according to an embodiment;
FIG. 2B is a diagram illustrating a structure of a next generation mobile communication system, according to an embodiment;
FIG. 2C is diagram illustrating a radio protocol structure of the next generation mobile communication system, according to an embodiment;
FIG. 2D is an exemplary diagram of a frame structure used in the next generation mobile communication system, according to an embodiment;
FIG. 2E is a diagram describing a synchronization signal structure of neighbor cells for description of intra-frequency neighbor cell measurement in the next generation mobile communication system, according to an embodiment;
FIG. 2F is a diagram describing a channel measurement and reporting procedure of a terminal in a connected state in the next generation mobile communication system, according to an embodiment;
FIG. 2G is a diagram illustrating the overall operation of a terminal, according to an embodiment;
FIG. 2H is a block diagram illustrating an internal structure of a terminal, according to an embodiment; and
FIG. 2I is a block diagram illustrating a configuration of a base station according to an embodiment.

### [Mode for the Invention]

Hereinafter, embodiments of the disclosure will be described in detail in conjunction with the accompanying drawings. In the following description of the disclosure, a detailed description of known functions or configurations incorporated herein will be omitted when it may make the subject matter of the disclosure rather unclear. The terms which will be described below are terms defined in consideration of the functions in the disclosure, and may be different according to users, intentions of the users, or customs. Therefore, the definition should be based on the contents throughout the specification. As used herein, the terms "1st" or "first" and "2nd" or "second" may use corresponding components regardless of importance or order and are used merely to distinguish one component from another without limiting the components.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to complete the disclosure and to inform those skilled in the art of the scope of the disclosure, and the disclosure is defined only by the scope of the appended claims. Throughout the specification, the same or like reference numerals designate the same or like elements.

Hereinafter, the operating principle of the disclosure will be described in detail with reference to the accompanying drawings. In the description below, a detailed description of related known configurations or functions incorporated herein will be omitted when it is determined that the detailed description thereof may unnecessarily obscure the subject matter of the disclosure. The terms which will be described below are terms defined in consideration of the functions in the disclosure, and may be different according to users, intentions of the users, or customs. Accordingly, the definitions of them should be made on the basis of the overall context of the disclosure.

Terms used for identifying a connection node, terms indicating network entities, terms indicating messages, terms indicating interfaces between network objects, terms indicating various identification information, etc. used in the following description are illustrated for convenience of explanation. Therefore, the disclosure may not be limited by the terminologies provided below, and other terms that indicate subjects having equivalent technical meanings may be used.

For convenience of explanation, the disclosure uses terms and names defined in the 3rd Generation Partnership Project Long Term Evolution (3GPP LTE) standard, or terms and names modified on the basis thereof. However, the disclosure is not limited by the above terms and names, and may be equally applied to systems conforming to other standards.

As discussed above, in the next generation mobile communication system, a partial periodic reference signal transmission and one-time aperiodic signal transmission are introduced. In this regard, it is advantageous to define a method for reporting measurement values of corresponding reference signals in a deactivated state. Moreover, it is advantageous to define how to perform reporting when reference signal transmission that has been initiated during the activation time continues even after the activation time is completed.

According to measurement within a frequency defined in the next generation mobile communication system, when a terminal performs radio resource measurement based on a synchronization signal, tuning an RF receiver to measure another serving cell with RF characteristics of the terminal may cause delay or increase terminal complexity. In general, for intra-frequency measurements, because a value measured in one serving cell within a frequency is not significantly different from a value measured in another serving cell within the frequency, it is not necessary to perform radio resource measurement based on a synchronization signal in all serving cells within the frequency. Accordingly, an aspect of the disclosure is to provide a method for preventing measurement from being performed in a specific serving cell in radio resource measurement based on a synchronization signal within a frequency.

In order to address the above issues, the disclosure discloses a method by a terminal in a wireless communication system comprises receiving, from a base station, first configuration information associated with a discontinuous reception (DRX) and second configuration information associated with a transmission of an uplink signal, performing a DRX operation based on the first configuration information, receiving, from the base station, a control message for triggering the transmission of the uplink signal, during an active time according to the DRX operation, identifying whether a time resource for transmitting of the uplink signal is in the active time based on the second configuration information, and determining whether to transmit the uplink signal not in the active time according to a transmission type of the uplink signal based on the second configuration information, based on the time resource being not in the active time.

In the disclosure, according to one or more embodiments, in a state where a discontinuous reception period of a deactivated state in a next generation mobile com system is configured, in particular, when transmission of a channel state reference signal and a sounding reference signal has started in an activation period and then transmission of the corresponding reference signals continues even after the activation state, a standard operation may be clarified and the configured reference signals may be reported to a base station in a timely manner by defining the completion of a once-started measurement report on the corresponding reference signals.

In addition, according to one or more embodiments, in radio resource measurement based on an in-frequency synchronization signal defined in the next generation mobile communication system, it is possible to reduce the burden on a terminal to measure all serving calls in the frequency and neighbor cells of corresponding serving cells, by a method for preventing a specific serving cell from performing measurement. Therefore, it is possible to reduce terminal complexity and, particularly, reduce an RF tuning delay time for radio resource measurement and battery consumption.

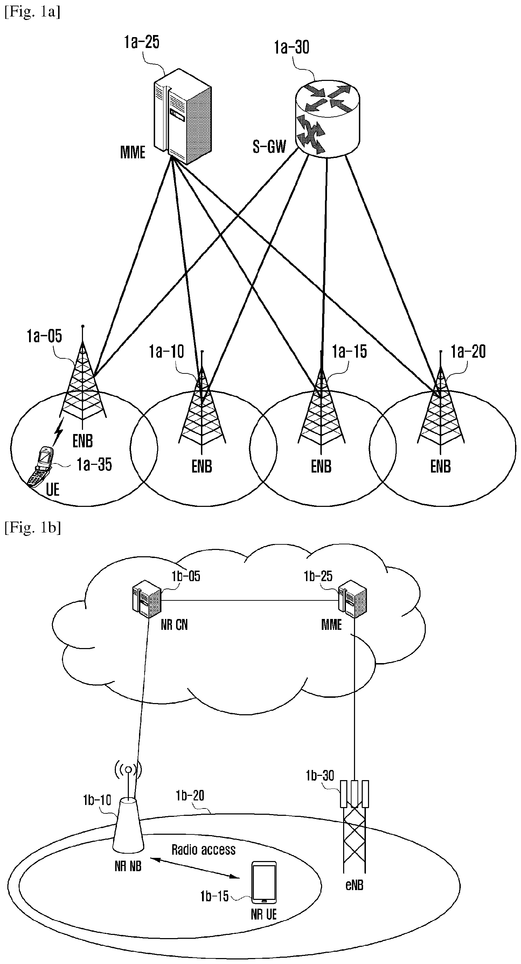

FIG. 1A is a diagram illustrating a structure of an LTE system, according to an embodiment.

Referring to FIG. 1A, as illustrated, a radio access network of an LTE system includes a plurality of base stations (Evolved Node B, hereinafter, eNB, Node B, or a base station) 1a-05, 1a-10, 1a-15, 1a-20, a Mobility Management Entity (MME) 1a-25, and a Serving-Gateway (S-GW) 1a-30. A user terminal (User Equipment, hereinafter, UE or terminal) 1a-35 accesses an external network through the eNB 1a-05 to 1a-20 and S-GW 1a-30.

In FIG. 1A, the eNB 1a-05 to 1a-20 is similar, in some respects, to a node B of a Universal Mobile Telecommunications System (UMTS) system, in that the eNB is connected with the UE 1a-35 through a wireless channel. However, the eNB performs a more complicated role than the node B. In the LTE system, because user traffic including a real-time service, such as Voice over IP (VoIP) over the Internet protocol, is serviced through a shared channel, a device that collects state information, such as buffer states, available transmission power states, and channel states of the UEs, and performs scheduling is used, and the eNBs 1a-05 to 1a-20 take charge of collecting the state information and performing scheduling. A single eNB normally controls a plurality of cells.

For example, in order to implement a transmission rate of 100 Mbps, the LTE system uses an Orthogonal Frequency Division Multiplexing (OFDM) as a radio access technology in a bandwidth of 20 MHz. Further, a modulation scheme and an Adaptive Modulation and Coding (hereinafter, referred to as an AMC) scheme of determining a channel coding rate are applied to the LTE system in correspondence to a channel state of the UE.

The S-GW 1a-30 is a device for providing a data bearer, and generates or removes the data bearer under a control of the MME 1a-25. The MME 1a-25 is a device that performs various control functions as well as a mobility management function for the UE, and is connected to the plurality of eNBs 1a-05, 1a-10, 1a-15, 1a-20.

FIG. 1B is a diagram illustrating a structure of a next generation mobile communication system, according to an embodiment.

Referring to FIG. 1B, as illustrated, a radio access network of a next generation communication system includes a next generation base station (New Radio Node B, hereinafter, NR NB or NR base station) 1b-10 and a New Radio Core Network (NR CN) 1b-05. A user terminal (New Radio User Equipment, hereinafter, NR UE or terminal) 1b-15 accesses an external network through the NR NB 1b-10 and the NR CN 1b-05.

In FIG. 1B, the NR NB 1b-10 is similar, in some respects, to the Evolved Node B (eNB) of the LTE system in that the NR NB 1b-10 is connected with the NR UE 1b-15 via a wireless channel. However, the NR NB 1b-10 may provide a more superior service than an eNB. In the next generation mobile communication system, because user traffic is serviced through a shared channel, a device that collects state information, such as a buffer state, an available transmission power state, and a channel state of UEs, and performs scheduling is used, and the NR NB 1b-10 takes charge of collecting the state information and performing scheduling. A single NR NB 1b-10 normally controls a plurality of cells 1b-20. In order to implement high-speed data transmission compared to LTE, an existing maximum bandwidth or more may be available, and Orthogonal Frequency Division Multiplexing (hereinafter, referred to as OFDM) may be used as a radio access technology to further combine a beamforming technology. Further, a modulation scheme and an Adaptive Modulation and Coding (hereinafter, referred to as an AMC) scheme for determination of a channel coding rate are applied to the LTE system in correspondence to a channel status of the UE.

The NR CN 1b-05 performs functions, such as mobility support, bearer configuration, and QoS configuration. The NR CN is a device that takes charge of various control functions as well as a mobility management function for the UE, and is connected to a plurality of NR NBs. Further, the next generation mobile communication system may be linked to an LTE system, and NR CN is connected with the MME 1b-25 through a network interface. The MME is connected to the eNB 1b-30.

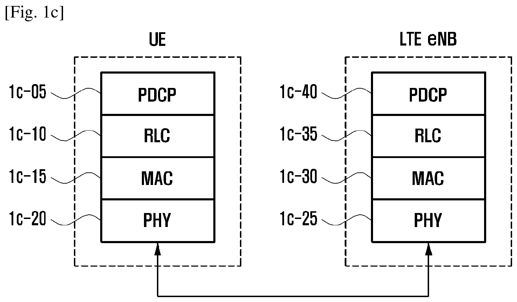

FIG. 1C is diagram illustrating a radio protocol structure of the next generation mobile communication system, according to an embodiment.

Referring to FIG. 1C, a radio protocol of the next generation mobile communication system includes an NR PDCP 1c-05, an NR RLC 1c-10, and an NR MAC 1c-15 in a UE, and includes an NR PDCP 1c-40, an NR RLC 1c-35, and an NR MAC 1c-30 in an NR NB. Main functions of the NR PDCPs 1c-05 and 1c-40 may include one or more of the following functions.
- a header compression and decompression function (ROHC only)
- a user data transmission function
- an in-sequence delivery function (in-sequence delivery of upper layer PDUs)
- a reordering function (PDCP PDU reordering for reception)
- a duplicate detection function (duplicate detection of lower layer SDUs)
- a retransmission function (retransmission of PDCP SDUs)
- a ciphering and deciphering function
- a timer-based SDU discard function (timer-based SDU discard in uplink)

In the above, a reordering function of an NR PDCP device denotes a function of reordering PDCP PDUs received from a lower layer, in the order based on PDCP sequence numbers (SN), and may include a function of transferring data to an upper layer in the order of rearrangement, may include a function of rearranging the order and recording lost PDCP PDUs, may include a function of reporting states of the lost PDCP PDUs to a transmission side, and may include a function of requesting retransmission of the lost PDCP PDUs.

Main functions of the NR RLCs 1c-10 and 1c-35 may include one or more of the following functions.
- a data transmission function (transfer of upper layer PDUs)
- a in-sequence delivery function (in-sequence delivery of upper layer PDUs)
- an out-of-sequence delivery function (out-of-sequence delivery of upper layer PDUs)
- an ARQ function (error correction through ARQ)
- a concatenation, segmentation, and reassembly function (concatenation, segmentation and reassembly of RLC SDUs)
- a re-segmentation function (re-segmentation of RLC data PDUs)
- a reordering function (reordering of RLC data PDUs)
- a duplicate detection function
- an error detection function (protocol error detection)
- an RLC SDU discard function
- an RLC re-establishment function

In the above, the in-sequence delivery function of an NR RLC device denotes a function of delivering RLC SDUs received from a lower layer to an upper layer in order, may include a function of, when an originally one RLC SDU is divided into a plurality of RLC SDUs and then received, reassembling and delivering the received RLC PDUs, may include a function of rearranging the received RLC PDUs on the basis of a RLC sequence numbers (SNs) or PDCP sequence numbers (SNs), may include a function of rearranging the order and recording lost RLC PDUs, may include a function of reporting states of the lost RLC PDUs to a transmission side, may include a function of requesting retransmission of the lost RLC PDUs, and may include a function of, when there is a lost RLC SDU, delivering only RLC SDUs before the lost RLC SDU to the upper layer in order. Alternatively, the in-sequence delivery function may include a function of, although there is the lost RLC SDU, if a predetermined timer has been expired, delivering all RLC SDUs received before starting of the timer to the upper layer in order, or may include a function of, although there is the lost RLC SDU, if the predetermined timer has been expired, delivering all RLC SDUs received up to the present time to the upper layer in order.

Also, in the above, the RLC PDUs may be processed in the order of reception thereof (in the order of arrival of the RLC PDUs, regardless of the order of the sequence numbers, and serial numbers) and may be delivered to the PDCP device in an out-of-sequence delivery manner. In the case of segments, segments stored in a buffer or to be received at a later time may be received and reconfigured into one complete RLC PDU, processed, and then delivered to the PDCP device. In some embodiments, the NR RLC layer may omit a concatenation function, and in such a case, the concatenation function may be performed in an NR MAC layer or may be replaced with a multiplexing function of the NR MAC layer.

In the above, the out-of-sequence delivery function of the NR RLC device denotes a function of delivering RLC SDUs received from the lower layer to an immediate upper layer in the out-of-sequence delivery manner, may include a function of, when an originally one RLC SDUs are divided into a plurality of RLC SDUs and received, reassembling and delivering the received RLC SDUs, and may include a function of storing the RLC SN or the PDCP SN of the received RLC SDUs, arranging the order thereof, and recording lost RLC SDUs.

The NR MAC 1c-15 or 1c-30 may be connected to multiple NR RLC layers included in one UE, and main functions of the NR MAC may include some of the following functions.
- a mapping function(mapping between logical channels and transport channels)
- a multiplexing/demultiplexing function (multiplexing/demultiplexing of MAC SDUs)
- a scheduling information reporting function
- an HARQ function (error correction through HARQ)
- a function of adjusting priority between logical channels (priority handling between logical channels of one UE)
- a function of adjusting priority between UEs (priority handling between UEs by means of dynamic scheduling)
- an MBMS service identification function
- a transmission format selection function (transport format selection)
- a padding function

NR PHY layer 1c-20 or 1c-25 may perform channel-coding and modulation of upper layer data, making the channel-coded and modulated upper layer data into OFDM symbols and transmitting the OFDM symbols via a wireless channel, or demodulating and channel-decoding the OFDM received through the wireless channel and delivering the same to the upper layer.

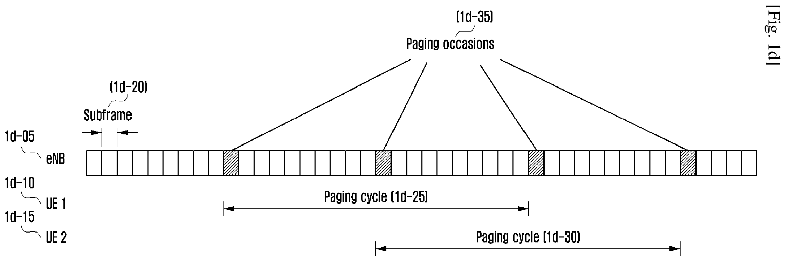

FIG. 1D is a diagram describing a Discontinuous Reception (DRX) operation for an idle terminal, according to an embodiment.

UEs 1d-10 and 1d-15 monitor a Physical Downlink Control Channel (PDCCH) in order to receive paging from a network when the UEs 1d-10 and 1d-15 are in a Radio Resource Control (RRC) idle state. In LTE, as an effective method to reduce power consumption of the UE, a Discontinuous Reception (hereinafter, DRX) interval is configured in units of subframes 1d-20, and therefore a receiver wakes up for a while only for a time period and sleeps for most of the rest of the time. The time period may be predetermined. That is, a paging cycle 1d-25 or 1d-30 that is a time interval determined to receive paging from the network is configured.

When the UE detects a Paging-Radio Network Temporary Identifier (P-RNTI) used for paging, the UE 1d-10 or 1d-15 processes a corresponding downlink paging message. The paging message includes an identifier (ID) of the UE, and UEs other than the corresponding ID discard received information and sleep according to a DRX cycle. During the DRX cycle, because an uplink timing is not known, a Hybrid Automatic Repeat request (HARQ) is not used.

The network configures a subframe 1d-20 in which the UE should receive paging. For the configuration, a minimum value between a cycle Tue requested by the UE and a cycle Tc specific to a cell is used. Further, frames 32, 64, 128, and 256 are configured for the paging cycle. Extracting subframes may be performed to perform monitoring for paging within the frames from an International Mobile Subscriber Identity (IMSI) of the UE. Because each UE has a different IMSI, the UE operates according to a paging instance belonging to each UE in a paging occasion 1d-35.

Transmission of the paging message may occur only in some subframes, and available configurations are shown in [Table 1A] described below.

**[Table 1A]**

| | | **Number of Paging Subframes** | | | | | | | |
|---|---|---|---|---|---|---|---|---|---|
| | | **1/32** | **1/16** | **1/8** | **1/4** | **1/2** | **1** | **2** | **4** |
| **Paging Subframe** | **FDD** | **9** | **9** | **9** | **9** | **9** | **9** | **4,9** | **0,4,5,9** |
| | **TDD** | **0** | **0** | **0** | **0** | **0** | **0** | **0,5** | **0,1,5,6** |

DRX for an idle state UE may be changed in NR in the LTE system. Particularly, a subframe-based Paging Occasion (PO) has been configured in LTE, but a determination may be made in units of slots or symbols in NR. The determination in NR is in accordance with supporting a variety of sub-carrier spacings and performing beam management in NR. However, an overall operational principle may be similar.

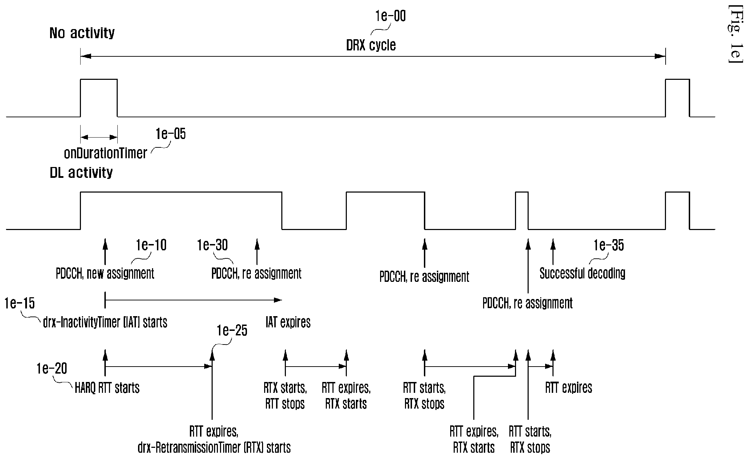

FIG. 1E is a diagram describing a DRX operation for a UE in an RRC connection state, according to an embodiment.

DRX is also defined in an RRC connection state, and an operation method is different from DRX in an idle state. As described above, continuous monitoring of the PDCCH by a UE in order to acquire scheduling information may cause a large power consumption. A DRX operation has a DRX cycle 1e-00, and includes monitoring of the PDCCH only for an on-duration time period 1e-05 .

In a connection mode, two types of values, which are a long DRX and a short DRX, are configured for the DRX cycle. A long DRX cycle may be applied as a default, and an eNB may trigger a short DRX cycle by using a MAC Control Element (CE). After a time period has passed, the UE may change from the short DRX cycle to the long DRX cycle. The time period may be predetermined.

Initial scheduling information of a specific UE is provided only in the predetermined PDCCH. Therefore, the UE may minimize power consumption by periodically monitoring only the PDCCH. If scheduling information for a new packet is received (PDCCH, new assignment) 1e-10 by the PDCCH for the on-duration time period 1e-05, the UE starts a DRX inactivity timer 1e-15. The UE maintains an active state (shown in FIG. 1E by the DL activity being high) during the DRX inactivity timer. That is, PDCCH monitoring is maintained.

Further, the UE may also start a HARQ RTT timer 1e-20. The HARQ RTT timer is applied to prevent the UE from unnecessarily monitoring the PDCCH for the HARQ Round Trip Time (RTT) period, and it is not necessary for the UE to monitor the PDCCH for a timer operation time period of the HARQ RTT timer 1e-20. However, while the DRX inactivity timer and the HARQ RTT timer are concurrently operating, the UE continues PDCCH monitoring on the basis of the DRX inactivity timer.

When the HARQ RTT timer expires, a DRX retransmission timer (RTX) 1e-25 starts. While the DRX retransmission timer (RTX) 1e-25 is operating, the UE monitors the PDCCH. During the operation time of the DRX retransmission timer (RTX) 1e-25, scheduling information for HARQ retransmission is received (PDCCH, re assignment) 1e-30. When the scheduling information is received (PDCCH, re assignment) 1e-30, the UE immediately stops the DRX retransmission timer (RTX) and restarts the HARQ RTT timer (RTT). The above operation continues until the packet is successfully received (successful decoding) 1e-35.

Configuration information related to the DRX operation in the connection mode is delivered to the UE via a RRCConnectionReconfiguration message. An on-duration timer that controls the on-duration time period 1e-05, the DRX inactivity timer 1e-15, and the DRX retransmission timer (RTX) in LTE are defined according to the number of PDCCH subframes. However, unlike in LTE, in NR, the timer values are configured according to a millisecond (ms) unit, which is an actual time unit, or to a symbol unit and a slot unit, instead of the number of subframes. This is because, unlike in LTE, in NR, a unit for PDCCH monitoring is not a subframe unit on the basis of sub-carrier spacing configured to a bandwidth part (BWP), and is to specify an exact timing. After a timer starts, if a time interval for PDCCH monitoring passes corresponding to a configured number, the timer expires.

All downlink subframes belong to a PDCCH subframe in LTE Frequency Division Duplex (FDD), and a downlink subframe and a special subframe correspond to the same in Time Division Duplex (TDD). In TDD, a downlink subframe, an uplink subframe, and a special subframe exist in the same frequency band. Among the downlink subframe, the uplink subframe, and the special subframe, the downlink subframe and the special subframe are considered to be PDCCH subframes. Likewise in the NR, the time interval for PDCCH monitoring differs according to FDD and TDD, and may be configured in units of symbols or units of slots, instead of in units of subframes.

The NR NB may configure two states of longDRX and shortDRX. The NR NB may use one of the two states in consideration of characteristics of a configured Data Radio Bearer (DRB), UE mobility record information, and power preference indication information reported from the UE. Transition of the two states is performed by transmitting a specific MAC CE or whether a specific timer expires or not to the UE.

Describing the structure related to configuration and reporting related to channel state information (CSI) in the next generation mobile communication system, a time/frequency resource for reporting the CSI is controlled by the NR NB. Parameters for CSI reporting include a Channel Quality Indicator (CQI), a Precoding Matrix Indicator (PMI), a CSI-RS Resource Indicator (CRI), a Layer Indication (LI), a Rank Indication (RI), and L1-RSRP.

The UE receives a configuration of one ReportTriggerList that is a list of trigger states, M Resource Settings (CSI-ResourceConfig), and N Reporting settings (CSI-ReportConfig) through an RRC message received from the NR NB. The N and M may be configured to be a plurality of constant values by RRC and may have different values. The list includes CSI-ReportConfigs indicating Resource Set ID corresponding to a channel and interference, and used for triggering reporting on the corresponding resource sets. In the disclosure, a brief description of a CSI framework in the described NR is provided, and, by applying the description, the disclosure proposes CSI reporting and an SRS transmission method when a state where DRX is configured is not in an active time.

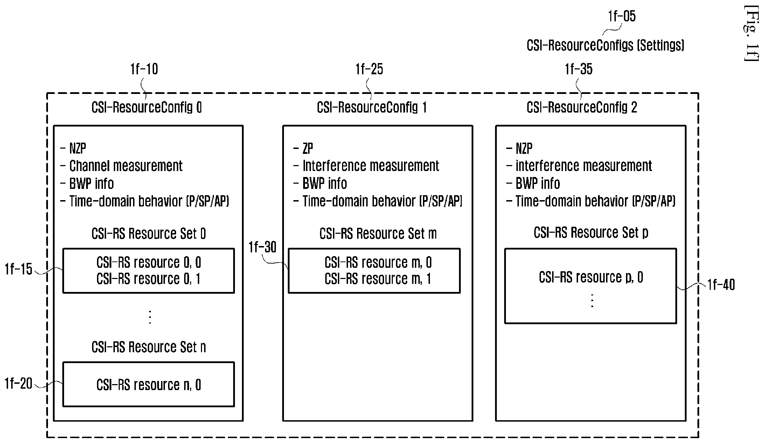

FIG. 1F is a diagram describing a CSI resource setting method in the next generation mobile communication system, according to an embodiment.

Referring to FIG. 1F, a CSI resource setting may include a maximum of 16 CSI resource sets 1f-15, 1f-20, 1f-30, and 1f-40 in each CSI-ResourceConfing 1f-10, 1f-25, and 1f-35, and a corresponding configuration is applied to a DL BWP configured according to an RRC message. The CSI resource settings (CSI-ResourceConfing) are connected to CSI report settings configured for the same DL BWP. The CSI resource sets 1f-15, 1f-20, 1f-30, and 1f-40 may include CSI-RS resources configured based on a non-zero power (NZP), a CSI-RS, or CSI-interference measurement (IM), and includes a SS/PBCH Block resource for calculation of a Layer 1 Reference Signal Reference Power (L1-RSRP).

The CSI-RS resources are classified into ResourceConfigType in a time domain, and a corresponding type may be configured to be Aperiodic (AP), Periodic (P), or Semi-persistent (SP). However, the number of CSI-RS resource sets for P/SP CSI resource setting is limited to one, and a periodicity and a slot offset in the configuration follows the numerology of a corresponding DL BWP. Further, the CSI resource setting may specify a channel and interference to be measured. That is, the CSI IM/NZP CSI-RS may be configured, 1f-25 and 1f-35, as interference, or the NZP CSI-RS resource 1f-10 may be configured for channel measurement.

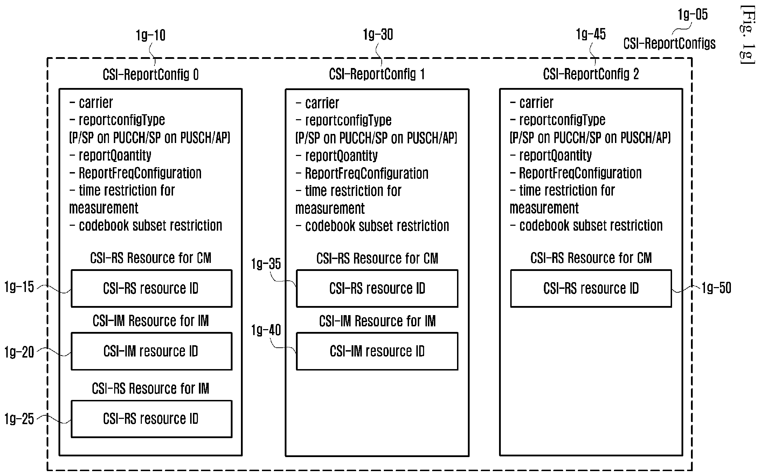

FIG. 1G is a diagram describing a configuration of a CSI resource reporting method in the next generation mobile communication system, according to an embodiment.

Referring to FIG. 1G, as configuration of a method of CSI reporting in a time domain, a report type may be configured to be aperiodic, periodic, or semi-persistent for each CSI-ReportConfig 1g-10, 1g-30, or 1g-45. In the case of P/SP CSI reporting, configured periodicity and slot offset are applied to the numerology of a corresponding UL BWP, and a transmission resource is directly indicated via Downlink Control Information (DCI) in the case of an aperiodic reporting. In the CSI resource reporting configuration, whether the corresponding CSI reporting is CSI-related or L1-RSRP-related is indicated via ReportQuantity, and ReportFreqConfiguration indicates reporting granularity of a frequency domain, by which whether a CSI reporting band and PMI/CQI reporting is a wideband or a sub-band is indicated.

In addition, for CSI measurement limitation in the time domain, timeRestrictionForChannelMeasurements and timeRestrictionForInterferenceMeasurements are configured, and CodebookConfig provides codebook subset restriction. A single CSI-ReportConfig 1g-10, 1g-30, or 1g-45 may configure an NZP CSI resource set 1g-15, 1g-35, or 1g-50 to be mandatory, and in some embodiments may associate NZP interference 1g-25 and ZP interference 1g-20 or 1g-40 with a CSI resource setting. This represents that CSI reporting may include a CSI resource and may further report an interference resource as well.

As described above, the configuration for CSI reporting may be aperiodic (using PUSCH), periodic (using PUCCH), or a semi-persistent (using PUCCH and DCI activated PUSCH). Here, associated CSI-RS resources may also be configured to be AP/P/SP and transmitted. How CSI reporting is triggered for each CSI-RS resource is shown in the following [Table 1B].

**[Table 1B] CSI reporting triggering/activation for CSI-RS configuration**

| **CSI-RS Configuration** | **Periodic CSI Reporting** | **Semi-Persistent CSI Reporting** | **Aperiodic CSI Reporting** |
|---|---|---|---|
| **Periodic CSI-RS** | **Directly triggering and performing reporting via RRC configuration (Performing reporting according to the configured cycle and offset values)** | **Reporting via PUCCH** | **Indicating a corresponding triggering state by DCI (a triggering state may be configured based on RRC, and may be indicated by MAC CE)** |
| | | **When SP CSI reporting is triggered by MAC CE, performing reporting according to configuration** | |
| | | **Reporting via PUSCH - Triggering SP CSI reporting by DCI** | |
| **Semi-Persistent CSI-RS** | **Not Supported** | **Reporting via PUCCH** | **Indicating a corresponding triggering state by DCI (a triggering state may be configured based on RRC, and may be indicated by MAC CE)** |
| | | **When SP CSI reporting is triggered by MAC CE, performing reporting according to configuration** | |
| | | **Reporting via PUSCH - Triggering SP CSI reporting by DCI** | |
| **Aperiodic CSI-RS** | **Not Supported** | **Not Supported** | **Indicating corresponding triggering by DCI (a triggering state may be configured based on RRC, and may be indicated by MAC CE)** |

As shown in [Table 1B], the CSI-RS configuration may have a CSI resource set configured to be one of P/SP/AP specific to each corresponding resource setting (CSI-ResourceConfig), and CSI resources having the same characteristics may be configured in the CSI resource set. The CSI resource setting (CSI-ResourceConfig) may be mapped to a specific CSI reporting configuration, and a method of CSI reporting transmission is configured to be one of P/SP/AP transmission. All P/SP/AP CSI reporting may be configured for a P CSI-RS resource; P/SP CSI reporting is applicable to an SP CSI resource; and only AP CSI reporting is applicable to an AP CSI resource.

In the case of P CSI reporting, reporting is performed according to a configured cycle and offset value on the basis of corresponding CSI-ReportConfig of an RRC message. This operation is performed without a separate triggering signal. In the case of SP CSI reporting, reporting is classified into two types according to a physical channel on which a triggering scheme and CSI reporting are performed.

A first type of SP CSI reporting is a scheme to perform SP CSI reporting which is triggered by an SP CSI reporting MAC CE and performed according to a CSI reporting configuration indicated by the MAC CE. For this scheme, CSI is semi-persistently reported through the PUCCH, and CSI is reported until inactivation is indicated through the SP CSI reporting MAC CE. The cycle and offset corresponding to the SP CSI reporting follow configuration values configured in a CSI-ReportConfig RRC configuration. A second type of SP CSI reporting is a method of activating SP CSI reporting on the basis of DCI. In this case, via RRC, a list of offsets and cycles and report slots are configured in the CSI-ReportConfig configuration for CSI reporting, which offset and cycle configuration to be used is indicated based on DCI that is indicated by a CSI-RNTI, and a PUSCH CSI report is triggered. The UE having received the DCI determines activation/deactivation of SP CSI reporting through the PUSCH according to an indication (activation/deactivation) included in the DCI. The method of determining the two ways of SP CSI reporting may be determined by the NR NB according to a channel state and a method (quantity) of reporting for transmission.

In the case of AP reporting, reportSlotOffsetList is provided through the RRC configuration (CSI-ReportConfig), and a triggering state, in which the AP CSI configuration is mapped to CSI-AperiodicTriggerState, is configured. The AP CSI reporting is triggered by receiving CSI request filed of DCI. The CSI request filed of the DCI may be set to a maximum of 6 bits. Further, when the AP CSI report configuration that is configured by RRC is larger than 2^CSI request field-1 (a maximum of 63) of the DCI, an operation of reducing a candidate triggering state through an MAC CE is included. A detailed triggering operation relating to the AP CSI report will be described in the following figure.

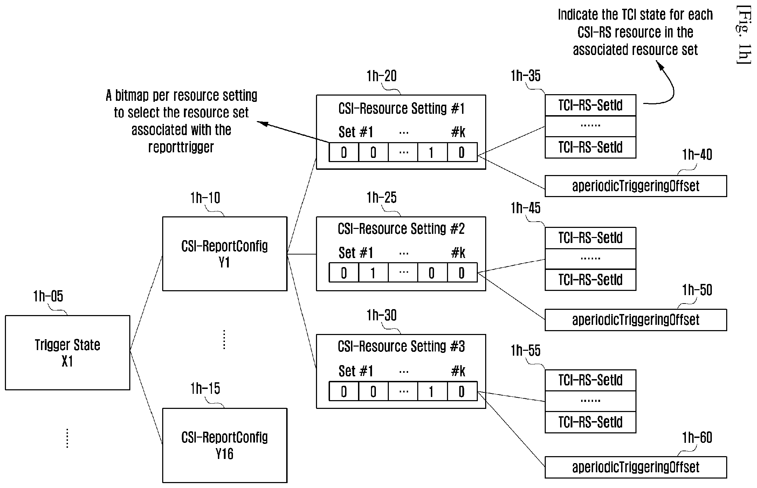

FIG. 1H is a diagram describing a triggering state configuration for CSI resource reporting in the next generation mobile communication system, according to an embodiment.

In the NR, configurations for AP CSI reporting are introduced separately from CSI reporting configurations provided by the RRC configuration. This method is a method of configuring a list of triggering states for AP CSI reporting, and indicating one or a plurality of AP CSI reporting through DCI.

First, a list of triggering states is provided in aperiodicReportTrigger through the RRC configuration. Each triggering state is associated with at least one CSI-ReportConfig, and the CSI-ReportConfig is associated with one or more P/SP/AP CSI resource settings. If a plurality of AP CSI resource sets are connected to the resource setting, and an AP CSI resource set, which is a subset of the AP CSI resource sets, is associated with a triggering state, to this end, only a corresponding setting is indicated in the form of bitmap.

In 1h-05, a trigger state level is set to a high level by RRC. The triggering state may be associated with a maximum of 16 CSI-ReportConfig(Setting) 1h-10 and 1h-15. Each CSI-ReportConfig level may be connected to up to three CSI resource settings 1h-20, 1h-25, and 1h-30, which correspond to an NZP CSI channel, a ZP CSI interference, and NZP CSI interference, respectively.

Levels of the CSI resource settings 1h-20, 1h-25, and 1h-30 may indicate CSI resource sets included in the corresponding resource settings in a bitmap form. The CSI resource set indicates the CSI resources 1h-35, 1h-45, and 1h-55 included, respectively, in the corresponding resource set, and provides a Transmission Configuration Indication Reference Signal (TCI-RS) state ID that is quasi co-located (QCL) with the corresponding CSI resource. In addition, the CSI resource set also provides offsets 1h-40, 1h-50, and 1h-60 for aperiodicReportTrigger. The offsets represent offsets at which DCI triggering and an actual CSI resource set are transmitted.

That is, if an aperiodic triggering state is activated via DCI, it means that the CSI resource set associated therewith described in FIG. 1H is reported. The reporting is performed once.

FIG. 1I is a diagram illustrating a method of CSI-RS reporting and SRS signal transmission when DRX is configured and applied, according to an embodiment.

FIG. 1I assumes that a connected DRX (hereinafter, referred to as C-DRX) is configured for a UE in an RRC connection state. The operation of C-DRX is described in detail in FIG. 1E, and a method of CSI-RS reporting and SRS signal transmission is defined based on the description.

The UE for which C-DRX has been configured performs PDCCH monitoring during an active time. That is, the UE monitors the PDCCH during the configured active time, and if scheduling for DL transmission or scheduling for UL transmission is received, the UE starts a DRX inactivity timer. The UE maintains an active state during the operation time of the DRX inactivity timer. That is, the UE continues PDCCH monitoring.

The UE also starts an HARQ RTT timer. The HARQ RTT timer is applied to prevent the UE from performing unnecessary PDCCH monitoring during an HARQ RTT time, and the UE is not required to perform PDCCH monitoring during operation time of the timer. However, while the DRX inactivity timer and the HARQ RTT timer are concurrently operating, the UE continues PDCCH monitoring on the basis of the DRX inactivity timer.

When the HARQ RTT timer expires, the DRX retransmission timer starts. While the DRX retransmission timer is operating, the UE monitors the PDCCH. During the operation time of the DRX retransmission timer, scheduling information for HARQ retransmission is received. When the scheduling information is received, the UE immediately suspends the DRX retransmission timer and restarts the HARQ RTT timer. The operations above are continued until the packet is successfully received.

However, because the UE does not perform PDCCH monitoring at a time other than the DRX active time, UL/DL data transmission is unable to be performed. Similarly, it is thus advantageous to define how CSI reporting and SRS transmission which are configured to be transmitted at a time other than the active time. As described above, a CSI reporting method may be broadly divided into the following four categories.
1. Periodic CSI reporting (P CSI reporting): Reporting with a defined cycle and offset through a configured PUCCH resource
2. Semi-persistent CSI reporting (SP CSI reporting) through PUCCH: Indicating activation/deactivation of SP CSI reporting by an MAC CE according to the invention as claimed.
3. Semi-persistent CSI reporting (SP CSI reporting) through PUSCH: Indicating activation/deactivation of SP CSI reporting on the basis of DCI according to the invention as claimed.
4. Aperiodic CSI reporting (AP CSI reporting): Indicating activation/deactivation of AP CSI reporting on the basis of DCI according to the invention as claimed.

As shown in the top part A of FIG. 1I, if the UE has received, in step 1i-10, a configuration of P CSI reporting as the RRC configuration, a corresponding CSI-RS 1i-20 is measured, and a reporting condition (cycle reporting or event triggering) is satisfied, the UE may perform CSI reporting 1i-30 within an active time 1i-05. However, the UE does not perform CSI reporting (x-ed out upward arrow) for a CSI-RS transmitted after the active time 1i-05 even if the reporting condition is satisfied. Likewise, in the case of SRS, when periodic SRS transmission is configured based on an RRC message, the UE performs transmission 1i-30 at the configured resource only during the active time 1i-05. The CSI-RS transmitted in the above may be a periodically delivered resource.

As shown in the middle part B of FIG. 1I, if the UE has received, in step 1i-40, a configuration of SP CSI reporting as the RRC configuration, a corresponding CSI-RS is measured, and a reporting condition (cycle reporting or event triggering) is satisfied, the UE may perform CSI reporting 1i-50 within the active time 1i-05 or may perform CSI reporting 1i-60 even if it is not the active time 1i-05. In relation to SP CSI-RS reporting, because the NR NB is capable of activating/deactivating a CSI reporting interval, if SP CSI reporting has been activated during the active time, the UE may determine to perform a CSI reporting until a deactivation signal arrives. The following methods may be used for an SP CSI reporting method.
1. All SP CSI reporting is not performed after the DRX active time.
2. After the DRX active time, SP CSI reporting transmitted on PUCCH, from among SP CSI reporting having been activated within the active time, is not performed, and SP CSI reporting transmitted on PUSCH is performed.
3. According to the invention as claimed, after the DRX active time, SP CSI reporting transmitted on PUSCH, from among SP CSI reporting having been activated within the active time, is not performed, and SP CSI reporting transmitted on PUCCH is performed.
4. Even after the DRX active time, all SP CSI reporting having been activated within the active time is performed.
5. In relation to SP CSI reporting having been activated within the DRX active time, the CSI reporting is suspended when the active time ends, and SP CSI reporting is resumed according to a corresponding configuration when the subsequent active time starts (when an MAC CE indicating deactivation of corresponding SP CSI reporting is received, SP CSI reporting is suspended).

Likewise, in the case of SRS, if SP SRS transmission is configured based on the RRC message and is activated during the DRX active time, the UE may perform SRS transmission similar to the SP CSI reporting method.
1. After the DRX active time, all SP SRS transmissions are not performed.
2. Even after the DRX active time, SRS transmission activated within the active time is performed.
3. SP SRS transmission activated within the DRX active time suspends SRS transmission when the active time ends, and resumes SP SRS transmission according to a corresponding configuration when the subsequent active time starts (when signaling (MAC CE or DCI) indicating deactivation of the corresponding SP SRS transmission is received, SP CSI reporting is suspended).

SP SRS transmission is automatically suspended when a corresponding serving cell is deactivated, and when the serving cell is activated, the suspended SP SRS transmission may be resumed. Alternatively, when the corresponding serving cell is deactivated, the SP SRS may be automatically deactivated. This case represents deactivation of SP SRS transmission even if deactivation of SP SRS transmission has not been indicated.

As shown in the bottom part C of FIG. 1I, when the UE has received, in step 1i-70, a configuration of AP CSI reporting as the RRC configuration, a corresponding AP CSI-RS 1i-75 or 1i-80 has been measured, and a reporting condition (cycle reporting or event triggering) has been satisfied (DCI-trigged), but a resource for the AP CSI reporting exists at a time other than the active time, the UE may not perform AP CSI reporting unless it is the active time 1i-05, or may perform AP CSI reporting 1i-90 even if it is not the active time 1i-05. That is, the following methods may be used.
1. All SP CSI reporting is not performed after the DRX active time.
2. According to the invention as claimed, in relation to AP CSI reporting activated within the DRX active time, CSI reporting is performed regardless of the active time even if the active time ends.

Likewise, in the case of SRS, if AP SRS transmission is configured based on the RRC message and has been activated during the DRX active time, but a transmission resource is after the active time, the UE may perform SRS transmission as described below, which is similar to the SP CSI reporting method.

After the DRX active time, AP SRS transmission is not performed.

In relation to AP SRS transmission activated within the DRX active time, SRS transmission is performed regardless of the active time even if the active time ends.

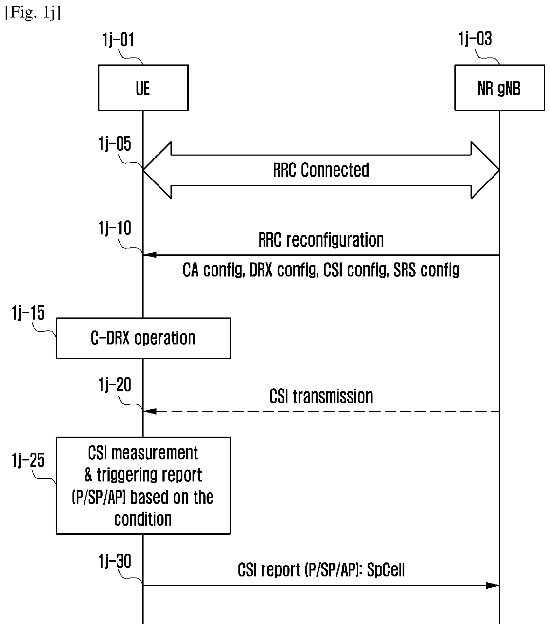

FIG. 1J is a diagram illustrating a method of CSI reporting in a state where DRX is configured and applied, according to an embodiment.

A UE 1j-01 and an NRNB 1j-03 perform an RRC connection configuration 1j-05, and then the NR NB performs an RRC reconfiguration 1j-10. That is, the NR NB may perform a carrier aggregation (CA) configuration, a DRX configuration (DRX config), a CSI resource and reporting configuration (CSI config), an SRS configuration (SRS config), etc. for the UE through the RRC reconfiguration 1j-10. The CSI configuration (CSI config) may include P CSI, SP CSI, and AP CSI configurations for each UL BWP with respect to SpCell, and has been described in detail in FIG. 1F, FIG. 1G, and FIG. 1H. In the case of the SRS configuration, P SRS, SP SRS, AP SRS configurations for a corresponding UL BWP are provided to each serving cell in SRS-config. In relation to the DRX configuration, a related configuration is provided to each corresponding cell group in MAC-CellGroupConfig. The configuration parameters include a DRX offset, onDurationTimer, InactivityTimer, HARQ-RTT-TimerDL, HARQ-RTT-TimerUL, and the like, and have been described in detail in FIG. 1E. The CA configuration provides a configuration enabling DL BWP and UL BWP configurations for each SCell and enabling the corresponding serving cell to operate.

In step 1j-15, the UE performs a C-DRX operation. The C-DRX operation may be performed according to the configuration in 1j-10. The C-DRX operation is shown in FIG. 1E. In step 1j-20, the UE receives a CSI transmission. That is, the UE measures a CSI-RS resource at which the NR NB performs transmission through a configured resource. The UE measures the received CSI-RS resource, and delivers a CSI report 1j-30 via SpCell when a corresponding condition 1j-25 is satisfied. In the disclosure, a CSI reporting method according to a condition may be specified as follows.
1. When a first CSI reporting condition is established, P CSI reporting is periodically transmitted.
2. When a second CSI reporting condition is established, SP CSI reporting is periodically transmitted.
3. When a third CSI reporting condition is established, AP CSI reporting is transmitted.

The condition may be specified as follows.
1. A first CSI reporting condition:
   A. A case where, for a UE, a P CSI reporting condition is triggered within a DRX active time, and a corresponding CSI reporting transmission resource exists within an active time.
2. A second CSI reporting condition:
   A. A case where, for the UE, an SP CSI reporting condition is triggered within the DRX active time, and a corresponding CSI reporting transmission resource exists within the active time;
   B. A case where, for the UE, the SP CSI reporting condition is triggered within the DRX active time, and SP CSI reporting is not suspended; or
   C. A case where, for the UE, the SP CSI reporting condition is triggered within the DRX active time, and corresponding SP CSI reporting is allowed even if an SP CSI reporting condition resource is out of the active time.
3. A third CSI reporting condition:
   A. A case of receiving DCI indicating AP CSI reporting (AP CSI reporting is performed regardless of the DRX active time)

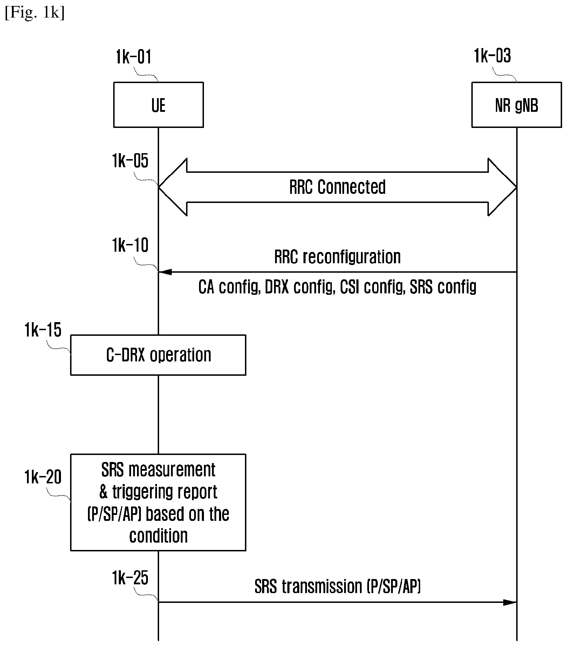

FIG. 1K is a diagram illustrating a method of SRS transmission in a state where DRX is configured and applied, according to an embodiment.

A UE 1k-01 and an NR NB 1k-03 perform an RRC connection configuration 1k-05, and then the NR NB performs an RRC reconfiguration 1k-10. That is, the NR NB may perform a carrier aggregation (CA) configuration, a DRX configuration (DRX config), a CSI resource and reporting configuration (CSI config), an SRS configuration (SRS config), etc. to the UE through the RRC reconfiguration 1k-10. The CSI configuration (CSI config) may include P CSI, SP CSI, and AP CSI configurations for each UL BWP with respect to SpCell, and has been described in detail in FIG. 1F, FIG. 1G, and FIG. 1H. In the case of the SRS configuration, P SRS, SP SRS, AP SRS configurations for a corresponding UL BWP for each serving cell are provided in SRS-config. In relation to the DRX configuration (DRX config), a related configuration is provided to each corresponding cell group in MAC-CellGroupConfig. The configuration parameters include a DRX offset, onDurationTimer, InactivityTimer, HARQ-RTT-TimerDL, HARQ-RTT-TimerUL, and the like, and have been described in detail in FIG. 1E. The CA configuration provides a configuration enabling DL BWP and UL BWP configurations for each SCell and enabling the corresponding serving cell to operate.

In step 1k-15, the UE performs a C-DRX operation. The C-DRX operation may be performed according to the configuration in 1k-10. The C-DRX operation is shown in FIG. 1E. In step 1k-20, the UE determines whether to perform SRS transmission through a resource configured by the NR NB. The UE identifies a configured condition, and when the corresponding configured condition is satisfied, the UE performs SRS transmission 1k-25 through the corresponding serving cell. In the disclosure, an SRS transmission method according to a condition may be specified as follows.
1. When a first SRS transmission condition is established, P SRS is periodically transmitted.
2. When a second SRS transmission condition is established, SP SRS is periodically transmitted.
3. When a third SRS transmission condition is established, AP SRS is transmitted.

The condition may be specified as follows.
1. A first SRS transmission condition:
   A. A case where a corresponding serving cell has been activated, and, for a UE, a P SRS transmission condition is triggered within a DRX active time, and a corresponding SRS transmission resource exists within an active time.
2. A second SRS transmission condition:
   A. A case where a corresponding serving cell has been activated, and, for the UE, an SP SRS transmission condition is triggered within the DRX active time and a corresponding SRS transmission resource exists within the active time;
   B. A case where the corresponding serving cell has been activated, and, for the UE, the SP SRS transmission condition is triggered within the DRX active time and SP SRS transmission is not suspended; or
   C. A case where the corresponding serving has been activated, and, for the UE, the SP SRS transmission condition is triggered within the DRX active time, and the corresponding SP SRS transmission is allowed even if an SP SRS transmission resource is out of the active time.
3. A third SRS transmission condition:
   A. A case of receiving DCI indicating AP SRS transmission (AP SRS transmission is performed regardless of the DRX active time)

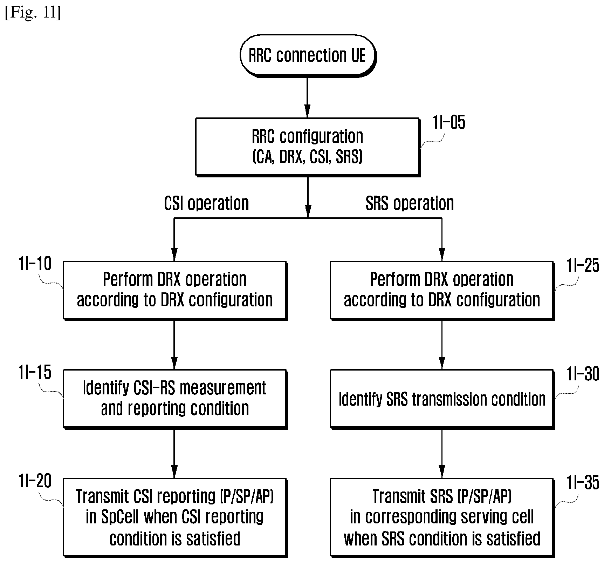

FIG. 1L is a diagram illustrating the overall operation of a UE, according to an embodiment.

A UE performs an RRC connection with an NR NB, and then an RRC configuration 11-05 is performed. That is, a carrier aggregation (CA) configuration, a DRX configuration (DRX config), a CSI resource and reporting configuration (CSI config), an SRS configuration (SRS config), etc. are performed through an RRC reconfiguration, 11-05. The CSI configuration (CSI config) may include P CSI, SP CSI, and AP CSI configurations for each UL BWP with respect to SpCell, and has been described in detail in FIG. 1F, FIG. 1G, and FIG. 1H. In the case of the SRS configuration (SRS config), P SRS, SP SRS, AP SRS configurations for a corresponding UL BWP for each serving cell are provided in SRS-config. In relation to the DRX configuration (DRX config), a related configuration is provided to each corresponding cell group in MAC-CellGroupConfig. The configuration parameters include a DRX offset, onDurationTimer, InactivityTimer, HARQ-RTT-TimerDL, HARQ-RTT-TimerUL, and the like, and have been described in detail in FIG. 1E. The CA configuration provides a configuration enabling DL BWP and UL BWP configurations for each SCell and enabling the corresponding serving cell to operate.

The UE simultaneously performs a CSI operation and an SRS operation in parallel according to configured values.

The UE performs a C-DRX operation according to the DRX configuration in step 11-10. The C-DRX operation is shown in FIG. 1E. In step 11-15, the UE identifies a CSR-RS measurement and reporting condition. That is, the UE may measure a CSI-RS resource transmitted through the resource configured by the NR NB. The UE transmits CSI reporting in SPCell when the CSI reporting condition is satisfied in 11-20. That is, the UE may measure the received CSI-RS resource, and when a corresponding condition is satisfied, the UE may deliver CSI reporting through SpCell 11-20. In the disclosure, a method of CSI reporting according to a condition is shown in FIG. 1j.

The UE performs the C-DRX operation according to the DRX configuration in step 11-25. The C-DRX operation is shown in FIG. 1E. In step 11-30, the UE identifies an SRS transmission condition. That is, the UE may determine whether to perform SRS transmission through the resource configured by the NR NB. When the SRS transmission condition is satisfied, the UE transmits SRS in corresponding serving cells 11-35. That is, the UE performs SRS transmission 11-35 through the corresponding serving cell. In the disclosure, an SRS transmission method according to a condition may be specified as described above.

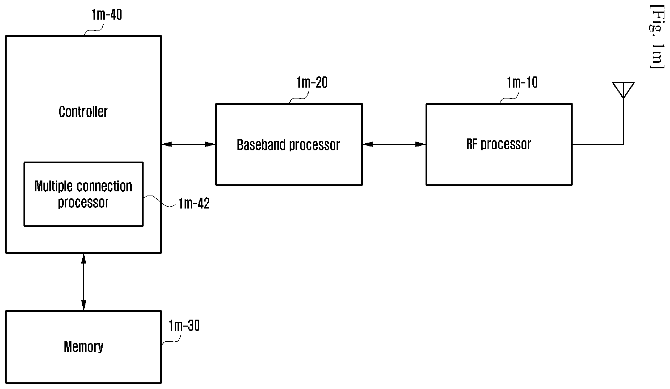

FIG. 1M is a block diagram illustrating an internal structure of a terminal, according to an embodiment.

Referring to FIG. 1M, a UE includes a Radio Frequency (RF) processor 1m-10, a baseband processor 1m-20, a memory 1m-30, and a controller 1m-40.

The RF processor 1m-10 performs a function for transmitting or receiving a signal through a wireless channel, such as band conversion and amplification of a signal. That is, the RF processor 1m-10 up-converts a baseband signal provided from the baseband processor 1m-20 into an RF band signal, transmits the converted RF band signal through an antenna, and then down-converts the RF band signal received through the antenna into a baseband signal. For example, the RF processor 1m-10 may include a transmission filter, a reception filter, an amplifier, a mixer, an oscillator, a digital-to-analog convertor (DAC), an analog-to-digital convertor (ADC), and the like. In FIG. 1M, only one antenna is illustrated, but the UE may have a plurality of antennas.

The RF processor 1m-10 may include a plurality of RF chains. Moreover, the RF processor 1m-10 may perform beamforming. For the beamforming, the RF processor 1m-10 may control a phase and a size of each signal transmitted or received through a plurality of antennas or antenna elements. The RF processor 1m-10 may perform MIMO, and may receive multiple layers when performing an MIMO operation.

The baseband processor 1m-20 performs conversion between a baseband signal and a bitstream according to a physical layer specification of a system. For example, the baseband processor 1m-20, when transmitting data, generates complex symbols by encoding and modulating a transmission bitstream. In addition, the baseband processor 1m-20, when receiving data, recovers a reception bitstream through demodulation and decoding of a baseband signal provided from the RF processor 1m-10. For example, in an Orthogonal Frequency Division Multiplexing (OFDM) scheme, when data is transmitted, the baseband processor 1m-20 generates complex symbols by encoding and modulating a transmission bitstream, maps the complex symbols to subcarriers, and then configures OFDM symbols through an Inverse Fast Fourier Transform (IFFT) operation and a Cyclic Prefix (CP) insertion. Further, when data is received, the baseband processor 1m-20 divides the baseband signal provided from the RF processor 1m-10 in the unit of OFDM symbols, reconstructs the signals mapped to the subcarriers through a Fast Fourier Transform (FFT) operation, and then reconstructs the reception bitstream through demodulation and decoding.

The baseband processor 1m-20 and the RF processor 1m-10 transmit and receive a signal as described above. Accordingly, the baseband processor 1m-20 and the RF processor 1m-10 together may be referred to as a transmission unit, a reception unit, and a transmission/reception unit, or a communication circuit. Further, one of the baseband processor 1m-20 and the RF processor 1m-10 may include a plurality of communication modules to support a plurality of different radio access technologies.

In addition, at least one of the baseband processor 1m-20 and the RF processor 1m-10 may include different communication modules to process signals of different frequency bands. For example, the different radio access technologies may include a wireless LAN (for example, IEEE 802.11), a cellular network (for example, LTE), and the like. Further, the different frequency bands may include a Super High Frequency (SHF) (i.e., 2.NRHz, NRhz) band and a millimeter (mm) wave (i.e., 60 GHz) band.

The memory 1m-30 stores data, such as a basic program, an application program, and configuration information for the operation of the UE. Particularly, the memory 1m-30 may store information related to a node performing wireless communication by using a second radio access technology. The memory 1m-30 provides stored data in response to a request of the controller 1m-40.

The controller 1m-40 controls overall operations of the UE. For example, the controller 1m-40 transmits or receives a signal through the baseband processor 1m-20 and the RF processor 1m-10. Further, the controller 1m-40 records and reads data in the memory 1m-30. To this end, the controller 1m-40 may include at least one processor. For example, the controller 1m-40 may include a Communication Processor (CP) that performs control for communication and an Application Processor (AP) that controls a higher layer, such as an application program.

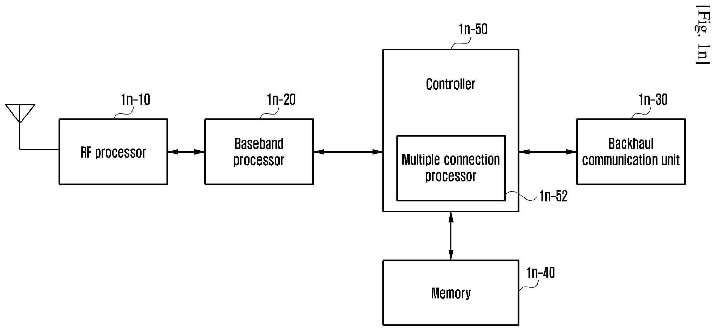

FIG. 1N is a block diagram illustrating a configuration of an NR base station according to the disclosure.

As illustrated in FIG. 1N, an NR NB may include an RF processor 1n-10, a baseband processor 1n-20, a backhaul communication circuit 1n-30, a memory 1n-10, and a controller 1n-50.

The RF processor 1n-10 performs a function to transmit or receive a signal through a wireless channel, such as band conversion and amplification of a signal. That is, the RF processor 1n-10 up-converts a baseband signal provided from the baseband processor 1n-20 into an RF band signal, transmits the converted RF band signal through an antenna, and then down-converts the RF band signal received through the antenna into a baseband signal. For example, the RF processor 1n-10 may include a transmission filter, a reception filter, an amplifier, a mixer, an oscillator, a DAC, an ADC, and the like. In FIG. 1N, only one antenna is illustrated, but the NR eNB may include a plurality of antennas.

The RF processor 1n-10 may include a plurality of RF chains. Further, the RF processor 1n-10 may perform beamforming. For the beamforming, the RF processor 1n-10 may adjust a phase and a size of each of signals transmitted or received through the plurality of antennas or antenna elements. The RF processor 1n-10 may perform a downlink MIMO operation by transmitting one or more layers.

The baseband processor 1n-20 performs a function of conversion between a baseband signal and a bitstream according to a physical layer specification of a first radio access technology. For example, the baseband processor 1n-20, when transmitting data, generates complex symbols by encoding and modulating a transmission bitstream. The baseband processor 1n-20, when receiving data, reconstructs a reception bitstream through demodulation and decoding of a baseband signal provided from the RF processor 1n-10. For example, in an OFDM scheme, when transmitting data, the baseband processor 1n-20 may generate complex symbols by encoding and modulating the transmission bitstream, map the complex symbols to subcarriers, and then configure OFDM symbols through an IFFT operation and CP insertion.

Further, the baseband processor 1n-20, when receiving data, divides the baseband signal provided from the RF processor 1n-10 into units of OFDM symbols, reconstructs signals mapped to the subcarriers through the FFT operation, and then reconstructs the reception bitstream through demodulation and decoding. The baseband processor 1n-20 and the RF processor 1n-10 transmit and receive a signal as described above. Accordingly, the baseband processor 1n-20 and the RF processor 1n-10 may be referred to as transmission unit, a reception unit, a transmission/reception unit, a communication circuit, or a wireless communication circuit.

The backhaul communication circuit 1n-30 provides an interface for performing communication with other nodes within the network. That is, the backhaul communication circuit 1n-30 converts a bitstream transmitted to another node in the main NR NB, such as an auxiliary NR NB and a core network, into a physical signal, and converts a physical signal received from the another node into a bitstream.

The memory 1n-40 stores data, such as a basic program for the operation of the main NR NB, an application program, and configuration information. Particularly, the memory 1n-40 may store information on a bearer assigned to a connected UE, a measurement result reported from the connected UE, and the like. The memory 1n-40 may store information serving as a criterion for determining whether to provide the UE with multiple connections or suspend the same. The memory 1n-40 provides stored data in response to a request of the controller 1n-50.

The controller 1n-50 controls overall operations of the NR NB. For example, the controller 1n-50 transmits or receives a signal through the baseband processor 1n-20 and the RF processor 1n-10 or through the backhaul communication circuit 1n-30. The controller 1n-50 records and reads data in the memory 1n-40. To this end, the controller 1n-50 may include at least one processor.

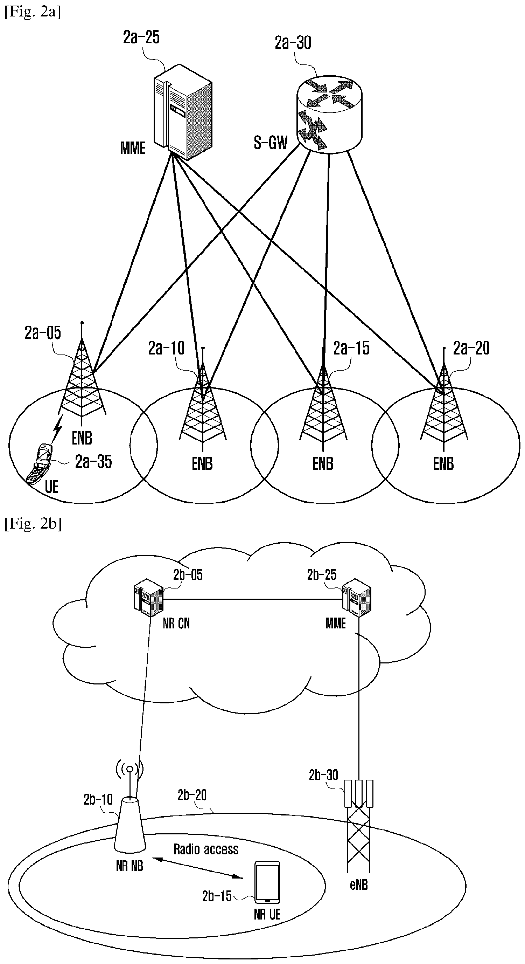

FIG. 2A is a diagram illustrating a structure of an LTE system, according to an embodiment.

Referring to FIG. 2A, as illustrated, a radio access network in the LTE system includes a plurality of next generation base stations (Evolved Node B, hereinafter eNB, Node B, or base station) 2a-05, 2a-10, 2a-15, and 2a-20, a Mobility Management Entity (MME) 2a-25, and a Serving-Gateway (S-GW) 2a-30. A user terminal (User Equipment, hereinafter, UE or terminal) 2a-35 accesses an external network through the eNB 2a-05 to 2a-20 and S-GW 2a-30.

In FIG. 2A, the eNB 2a-05 to 2a-20 is similar, in some respects, to a node B in a UMTS system. The eNB is connected to the UE 2a-35 through a wireless channel. However, the eNB performs a more complicated role than the node B. In the LTE system, because user traffic including a real-time service, such as Voice over IP (VoIP) over the Internet protocol, is serviced through a shared channel, a device which collects state information, such as buffer states, available transmission power states, and channel states of the UEs, and performs scheduling is necessary. The eNBs 2a-05 to 2a-20 take charge of collecting the state information and performing scheduling. One eNB generally controls a plurality of cells 2b-20. For example, in order to implement a transmission rate of 100 Mbps, the LTE system uses an Orthogonal Frequency Division Multiplexing (OFDM) as a wireless access technology in a bandwidth of 20 MHz.

Further, a modulation scheme and an Adaptive Modulation and Coding (hereinafter, referred to as an AMC) scheme of determining a channel coding rate are applied to the LTE system in correspondence to a channel state of the UE. The S-GW 2a-30 is a device for providing a data bearer, and generates or removes the data bearer under a control of the MME 2a-25. The MME is a device that performs various control functions as well as a mobility management function for the UE, and is connected to the plurality of eNBs 2a-05 to 2a-20.

FIG. 2B is a diagram illustrating a structure of a next generation mobile communication system, according to an embodiment.

Referring to FIG. 2B, as illustrated, a radio access network in the next generation mobile communication system includes a next generation base station (New Radio Node B, hereinafter, NR NB or NR gNB) 2b-10 and a New Radio Core Network (NR CN) 2b-05. A user terminal (New Radio User Equipment, hereinafter, NR UE or terminal) 2b-15 accesses an external network through the NR gNB 2b-10 and the NR CN 2b-05.

In FIG. 2B, the NR NB 2b-10 is similar, in some respects to, an Evolved Node B (eNB) in the LTE system. The NR NB 2b-10 is connected to the NR UE 2b-15 through a wireless channel. However, the NR NB 2b-10 may provide a more superior service than the eNB. In the next generation mobile communication system, because user traffic is serviced through a shared channel, a device that collects state information, such as buffer states, available transmission power states, and channel states of the UEs, and performs scheduling is necessary, and the NR NB 2b-10 takes charge of collecting the state information and performing scheduling. In general, a single NR NB controls a plurality of cells. In order to implement high-speed data transmission compared to existing LTE, an existing maximum bandwidth or more may be available, and Orthogonal Frequency Division Multiplexing (hereinafter, referred to as OFDM) may be used as a radio access technology to further combine a beamforming technology. Further, a modulation scheme and an Adaptive Modulation and Coding (hereinafter, referred to as an AMC) scheme for determination of a channel coding rate are applied to the LTE system in correspondence to a channel status of the UE.

The NR CN 2b-05 performs a function of mobility support, a bearer configuration, a QoS configuration, and the like. The NR CN is a device that takes charge of various control functions as well as a mobility management function for the UE, and is connected to a plurality of NR NBs. The next generation mobile communication system may be linked to a conventional LTE system, and NR CN is connected to the MME 2b-25 through a network interface. The MME is connected to the eNB 2b-30.

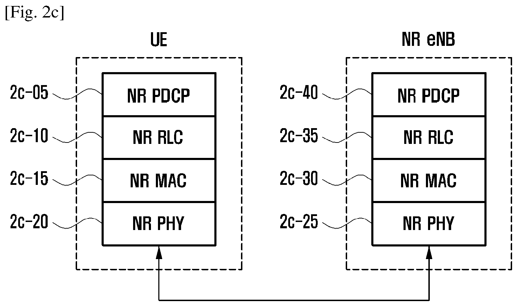

FIG. 2C is diagram illustrating a radio protocol structure of the next generation mobile communication system, according to an embodiment.

Referring to FIG. 2C, a radio protocol of the next generation mobile communication system includes an NR PDCP 2c-05, an NR RLC 2c-10, and an NR MAC 2c-15 in a UE, and includes an NR PDCP 2c-40, an NR RLC 2c-35, and an NR MAC 2c-30 in an NR NB. Main functions of the NR PDCPs 2c-05 and 2c-40 may include one or more of the following functions.
- a header compression and decompression function (ROHC only)
- a user data transmission function
- an in-sequence delivery function (in-sequence delivery of upper layer PDUs)
- a reordering function (PDCP PDU reordering for reception)
- a duplicate detection function (duplicate detection of lower layer SDUs)
- a retransmission function (retransmission of PDCP SDUs)
- a ciphering and deciphering function
- a timer-based SDU discard function (timer-based SDU discard in uplink)

In the above, a reordering function of an NR PDCP device denotes a function of reordering PDCP PDUs received from a lower layer, in the order based on PDCP sequence numbers (SN), and may include a function of transferring data to an upper layer in the order of rearrangement, may include a function of rearranging the order and recording lost PDCP PDUs, may include a function of reporting states of the lost PDCP PDUs to a transmission side, and may include a function of requesting retransmission of the lost PDCP PDUs.

Main functions of the NR RLCs 2c-10 and 2c-35 may include one or more of the following functions.
- a data transmission function (transfer of upper layer PDUs)
- a in-sequence delivery function (in-sequence delivery of upper layer PDUs)
- an out-of-sequence delivery function (out-of-sequence delivery of upper layer PDUs)
- an ARQ function (error correction through ARQ)
- a concatenation, segmentation, and reassembly function (concatenation, segmentation and reassembly of RLC SDUs)
- a re-segmentation function (re-segmentation of RLC data PDUs)
- a reordering function (reordering of RLC data PDUs)
- a duplicate detection function
- an error detection function (protocol error detection)
- an RLC SDU discard function
- an RLC re-establishment function

In the above, the in-sequence delivery function of an NR RLC device denotes a function of delivering RLC SDUs received from a lower layer to an upper layer in order, and when an originally one RLC SDU is divided into a plurality of RLC SDUs and received, the in-sequence delivery function may include a function of reassembling and delivering the received RLC PDUs, may include a function of rearranging the received RLC PDUs on the basis of a RLC sequence numbers (SNs) or PDCP sequence numbers (SNs), may include a function of rearranging the order and recording lost RLC PDUs, may include a function of reporting states of the lost RLC PDUs to a transmission side, may include a function of requesting retransmission of the lost RLC PDUs, and may include a function of, when there is a lost RLC SDU, delivering only the RLC SDUs before the lost RLC SDU to the upper layer in order. Alternatively, the in-sequence delivery function may include a function of, although there is the lost RLC SDU, if a predetermined timer has been expired, delivering all RLC SDUs received before starting of the timer to the upper layer in order, or may include a function of, although there is the lost RLC SDU, if the predetermined timer has been expired, delivering all RLC SDUs received up to the present time to the upper layer in order.

Also, in the above, the RLC PDUs may be processed in the order of reception thereof (in the order of arrival of the RLC PDUs, regardless of the order of the sequence numbers, and serial numbers) and may be delivered to the PDCP device in an out-of-sequence delivery manner. In the case of segments, segments stored in a buffer or to be received at a later time may be received and reconfigured into one complete RLC PDU, processed, and then delivered to the PDCP device. The NR RLC layer may not include a concatenation function, and the function may be performed in an NR MAC layer or may be replace with a multiplexing function of the NR MAC layer.

In the above, the out-of-sequence delivery function of the NR RLC device denotes a function of delivering, to an immediate upper layer, RLC SDUs received from the lower layer in the out-of-sequence delivery manner, may include a function of, when an originally one RLC SDUs are divided into a plurality of RLC SDUs and received, reassembling and delivering the received RLC SDUs, and may include a function of storing the RLC SN or the PDCP SN of the received RLC PDUs, arranging the order thereof, and recording lost RLC PDUs.

The NR MAC 2c-15 or 2c-30 may be connected to multiple NR RLC layers included in one UE, and main functions of the NR MAC may include one or more of the following functions.
- a mapping function (mapping between logical channels and transport channels)
- a multiplexing/demultiplexing function (multiplexing/demultiplexing of MAC SDUs)
- a scheduling information reporting function (scheduling information reporting)
- an HARQ function (error correction through HARQ)
- a function of adjusting priority between logical channels (priority handling between logical channels of one UE)
- a function of adjusting priority between UEs (priority handling between UEs by means of dynamic scheduling)
- an MBMS service identification function
- a transmission format selection function (transport format selection)
- a padding function

NR PHY layer 2c-20 or 2c-25 may perform channel-coding and modulation of upper layer data, making the channel-coded and modulated upper layer data into OFDM symbols and transmitting the OFDM symbols via a wireless channel, or demodulating and channel-decoding the OFDM received through the wireless channel and delivering the same to the upper layer.

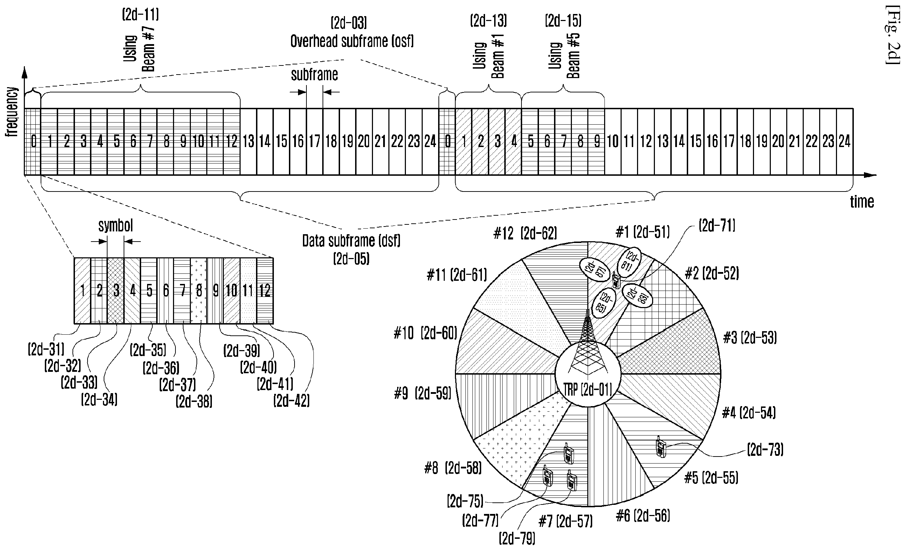

FIG. 2D is an exemplary diagram of a frame structure used in the next generation mobile communication system, according to an embodiment.

The NR system aims at a higher transmission rate compared to the LTE system, and considers a scenario of operating at a high frequency to ensure a wide frequency bandwidth. In particular, a scenario in which a directional beam is generated at a high frequency and data having a high data transmission rate is transmitted to the UE may be considered.

Accordingly, a scenario in which the NR NB or a Transmission Reception Point (hereinafter, TRP) 2d-01 uses different beams to communicate with UEs 2d-71, 2d-73, 2d-75, 2d-77, and 2d-79 in a cell may be considered. That is, in FIG. 2D, a scenario in which UE 1 2d-71 performs communication using beam #1 2d-51, UE 2 2d-73 performs communication using beam #5 2d-55, UE 3 2d-75, UE 4 2d-77, and UE 5 2d-79 perform communication via beam #7 2d-57 is assumed.

In order to measure which beams the UEs use to perform communication with a TRP, an overhead subframe (hereinafter, osf) 2d-03 in which a common overhead signal is transmitted exists in time. In the NR standard, the osf is referred to as a Synchronization Signal Block (SSB). The osf may include a Primary Synchronization Signal (PSS) for acquiring timing of an Orthogonal Frequency Division Multiplexing (OFDM) symbol, and a Secondary Synchronization Signal (SSS) for detecting a cell ID, and may transmit a Physical Broadcast Channel (PBCH) including system information, a Master Information Block (MIB), or information necessary for accessing the system by the UEs (e.g., a bandwidth of a downlink beam, a system frame number, etc. are received).

In the osf, the NR NB transmits a reference signal by using a different beam to each symbol (or to multiple symbols). A beam index value for distinguishing each beam may be derived from the reference signal. In FIG. 2D, it is assumed that there are 12 beams from beam #1 2d-51 to beam #12 2d-62 transmitted by the NR NB, and different beams are swept for respective symbols and transmitted in the osf. That is, in the osf, beams are transmitted to respective symbols (e.g., beam #1 2d-51 is transmitted in a first symbol 2d-31), and the UEs measure the osf so as to measure a signal from which beam has a greatest intensity, the signal being transmitted within the osf.

In FIG. 2D, a scenario, in which the osf is repeated once each 25 subframes, and the remaining 24 subframes are data subframes (hereinafter, dsf) 2d-05 in which normal data is transmitted or received, is assumed. In addition, a scenario, in which, according to scheduling of the NR NB, UE 3 2d-75, UE 4 2d-77, and UE 5 2d-79 perform communication 2d-11 using beam #7 in common, UE 1 2d-71 performs communication 2d-13 using beam #1, and UE 2 2d-73 performs communication 2d-15 using beam #5, is assumed. FIG. 2D illustrates transmission beams from #1 2d-51 # 12 2d-62 of the NR NB. However, reception beams (e.g., 2d-81, 2d-83, 2d-85, and 2d-87) of UE 1 2d-71, which are for receiving the transmission beams of the NR NB, may be further considered.

In FIG. 2D, UE 1 2d-71 has four beams 2d-81, 2d-83, 2d-85, and 2d-87, and performs beam sweeping to determine which beam achieves a best reception performance. When the UE is unable to use multiple beams concurrently, the UE may use one reception beam for each osf and may receive as many osfs as the number of reception beams, so as to find an optimal transmission beam of the NR NB and an optimal reception beam of the UE.

In the next generation mobile communication system (NR), unlike a related art LTE system, the definition of intra-frequency/inter-frequency measurement may be differently applied. In the NR, Radio Resource Measurement (RRM) is performed based on a Synchronization Signal Block (SSB). Further, in the LTE, subspace spacing (SCS) applied to one frequency has been constant, but, in the NR, a plurality of subspace spacing may be used in the same frequency band. In the NR, when channel measurement for a neighbor cell/NR NB is indicated, an SSB in a specific cell is measured, and it may be further determined whether subspace spacing of the SSB is constant, in order to clarify the definition of intra-frequency/inter-frequency measurement. The definition of intra-frequency/inter-frequency measurement may be divided into two categories as below.

### 1. Category 1

A. SSB-based intra-frequency measurement: In order to measure neighbor cells for intra-frequency, SSBs are measured of all neighbor cells having the same center frequency as that of an SSB of a current serving cell. Here, even if the SCS of the neighbor cells has a value different from a value of the current serving cell, the neighbor cells are included in the intra-frequency measurement.

B. SSB-based inter-frequency measurement: In order to measure neighbor cells for inter-frequency, SSBs are measured of all neighbor cells having a different center frequency as that of an SSB of a current serving cell.

### 2. Category 2

A. SSB-based intra-frequency measurement: In order to measure neighbor cells for intra-frequency, SSBs are measured of neighbor cells which have the same SCS and the same center frequency as that of an SSB of a current serving cell.

B. SSB-based inter-frequency measurement: In order to measure neighbor cells for inter-frequency, SSBs are measured of neighbor cells having center frequencies different from a center frequency of an SSB of a current serving cell, or SSBs are measured of other neighbor cells having the same center frequency as that of the SSB of the serving cell but having different SCS.

The definition of the SSB-based measurement may be established under the assumption that the same cell transmits only one or more SSBs. In addition, intra-frequency/inter-frequency measurement may be determined based on what SCS or SCS center frequencies of the neighbor cells are. In particular, for intra-frequency measurement of an idle UE, as in the LTE, system information may include measurement configurations for neighboring intra-frequency cells (SIB 4 in the LTE), and may include measurement configurations for the neighboring inter-frequency cells (SIB 5 in the LTE). Numbers and classifications of the system information may be used as it is in the NR. SIB 4 and SIB 5 may be delivered through Other System Information (OSI). System information in the NR may be classified into two types which are Master System Information (MSI) that is commonly required for all UEs, and OSI that may be provided in response to an on-demand request of the UE.

The UE in an RRC connection state may be configured to measure a neighbor cell and a serving cell with respect to the intra/inter frequency from the NR NB. The configuration may be performed in units of Measurement Objects (MO). An indicator that indicates cell measurement (L3 measurement) via a reference signal of a Channel State Information Reference Signal (CSI-RS) or an SSB, time/frequency configurations of the reference signal, a list of cells to be measured, and the like may be provided in a corresponding MO.

The UE is required to perform intra-frequency cell measurement for indicated cells in all serving frequencies indicated in the MO. However, in the NR, particularly in the case of intra-band CA, measurement on multiple Component Carriers (CCs) via a single RF by the UE may be complicated compared to the LTE. This is because, a timing at which an SSB/CSI-RS signal is transmitted may be different for each neighbor cell, and the UE follows and receives a beam with a single RF in order to measure the timing, so that a delay may occur or the complexity of UE implementation may increase.

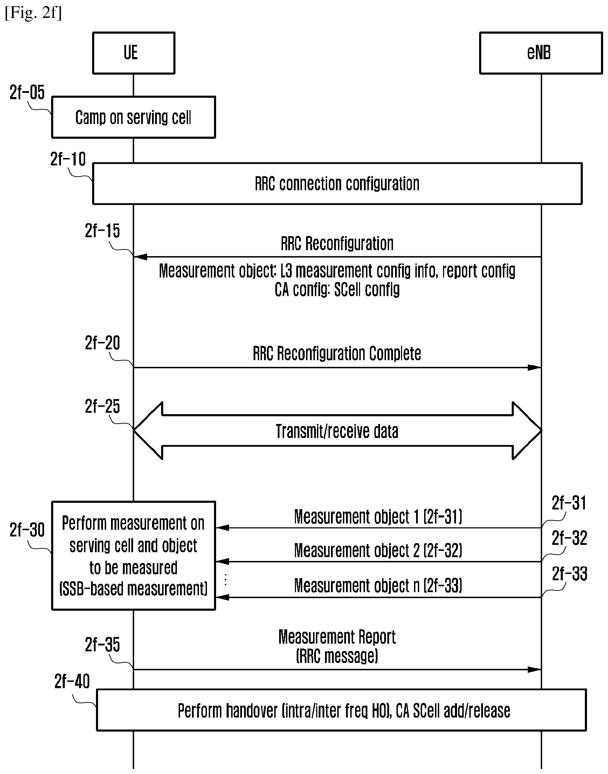

In order to address the problem, in the NR, an operation capable of enabling/disabling intra-frequency SCell measurement on a specific SCell, to which intra-band CA has been applied, is used. That is, an example, in which if there exists at least one serving cell that performs intra-frequency measurement on one indicated frequency, the burden on the UE may be reduced by not performing intra-frequency measurement in an intra-frequency serving cell other than the corresponding serving cell in accordance with a configuration of the NR NB, may be provided. This is possible on an assumption that because measurement values for neighbor cells measured in the serving cell in intra-frequency may be similar, there is no significant degradation in performance even if repeatedly measured values are omitted. FIG. 2F described hereinafter explains a reason why such an operation is applicable, through an SSB structure of intra-frequency cells.

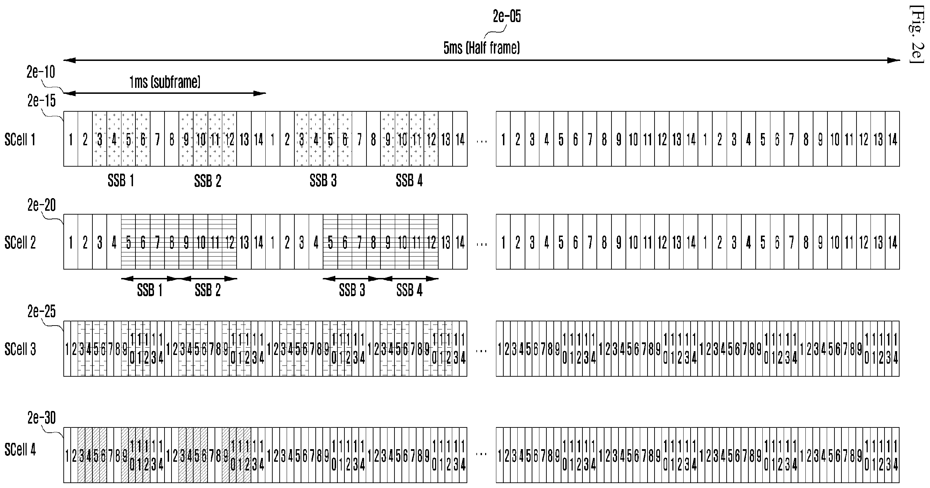

FIG. 2E is a diagram describing a synchronization signal structure of neighbor cells for description of intra-frequency neighbor cell measurement in the next generation mobile communication system, according to an embodiment.

As described in FIG. 2D, in the NR, SSBs are periodically transmitted in a specific area in order to measure a quality of a serving cell and acquire a synchronization signal in the serving cell. For initial access, the SSB is transmitted with a pattern in a 20ms cycle. FIG. 2E describes a candidate position at which the SSB may be delivered in units of half-frames (5ms) 2e-05, and how frequently the pattern is repeated may be changed by the NR NB via configuration.

For example, in the case of 15kHz Subcarrier Spacing (SCS), as identified in 2e-15 and 2e-20, two SSBs may be configured in 1ms 2e-10. That is, with respect to the pattern, because the UE is a candidate that may receive the SSB, the UE performs monitoring, and a window for an SS/PBCH block measurement timing configuration (SMTC) may be configured in the NR NB configuration, so that a monitoring area may be indicated. The configuration may be configured for each MO.

In the NR, even in the case of serving cells in intra-frequency, a frequency/time domain, in which the SSB is delivered, may be differently configured, and even different SCS may be configured. In FIG. 2E, it may be seen that a candidate area, in which the SSB may be delivered, is differently displayed for each of serving cells 2e-15, 2e-20, 2e-25, and 2e-30.

As described above, in the NR, an operation capable of enabling/disabling intra-frequency SCell measurement on a specific SCell, to which intra-band CA has been applied, is used. For example, if there exists at least one serving cell that performs intra-frequency measurement on one indicated frequency, the burden on the UE may be reduced by not performing intra-frequency measurement in an intra-frequency serving cell other than the corresponding serving cell in accordance with a configuration of the NR NB, may be provided.

Omitting intra-frequency measurement denotes to omit L3 measurement (SSB-based cell measurement), and it is not possible to omit L1/L2 measurement (CSI/beam-based measurement). This is because, without being associated with RRC, a beam recovery operation according to a beam failure and temporal reduction of beam performance is performed independently of radio resource monitoring (RRM). The disclosure proposes a method of determining whether to perform L# measurement according to the presence or absence and state of another serving cell of the same frequency band (intra-frequency) for L3 measurement described above.

The method proposed in the disclosure is described with reference to the following [Table 2A].

**[Table 2A] intra-frequency cell measurement enable/disable operation**

| **SCell 1 and SCell 2 belong to the same frequency band.** | | |
|---|---|---|
| **SCell 1** | **SCell 2** | **Note** |
| **A/Do** | **A/Do** | **Perform SSB measurement for one SCell/SCC among SCell 1 and SCell 2** |
| **A/Do** | **De** | **Perform SSB measurement for SCell 1/SCC 1** |
| **De** | **A/Do** | **Perform SSB measurement for SCell 2/SCC 2** |
| **De** | **De** | **Perform SSB measurement for one SCell/SCC among SCell 1 and SCell 2** |

A reference serving cell is configured, and intra-frequency measurement is determined according to the configured reference serving cell and a state of the serving cell. Three types of serving cell states exist in the table and may be defined as follows.
1. Active state (A): a state in which a serving cell has been activated
2. Dormant state (Do): a state in which a serving cell has not been activated but channel and reporting are possible
3. Deactivated state (De): a state in which a serving cell is deactivated

In the above, SCC denotes a secondary component carrier.

The table may include the following two options from a signaling point of view.
1. Option 1:
   - When the NR NB provides SCell configuration information, information indicating the presence or absence of conditional L3 intra-frequency measurement is configured together.
   - The information indicating the presence or absence of conditional L3 intra-frequency measurement is a reference SCell index. That is, one or multiple reference SCell indices are
   indicated, and the presence or absence of L3 measurement is determined according to a state of a corresponding reference SCell.
   1) If the reference SCell is in an activate state, a corresponding SCell does not perform L3 intra-frequency measurement.
   2) If a corresponding SCell is in a deactivated state, L3 intra-frequency measurement is not performed.
   3) If the reference SCell is in a deactivated state and a corresponding SCell is activated, the corresponding SCell performs L3 intra-frequency measurement.
2. Option 2:
   - When an MO is configured, information indicating the presence or absence of conditional L3 intra-frequency measurement is configured together.
   - The information indicating the presence or absence of conditional intra-frequency measurement is an MO identity. That is, one or multiple reference MO identities are indicated, and the presence or absence of L3 measurement is determined according to states of SCells belonging to the reference MO identity.

1) If the reference MO is a serving frequency (i.e., configured as an SCC), and a corresponding MO is also serving frequency, L3 intra-frequency measurement is not performed with respect to cells within the serving frequency belonging to the corresponding MO.

FIG. 2F is a diagram describing a channel measurement and reporting procedure of a UE in a connected state in the next generation mobile communication system, according to an embodiment.

A UE in an idle mode (RRC_IDLE) finds a suitable cell, i.e., a serving cell, and camps on the serving cell 2f-05. The UE may camp at an NR NB. Then, the UE connects to the NR NB for a reason, such as generation of data to be transmitted, and performs a RRC connection configuration 2f-10. The idle mode is a state in which a network is not connected for saving power of the UE, etc. so that data cannot be transmitted, and transition to a connection mode (RRC_CONNECTED) is performed for data transmission. Camping denotes that the UE remains in a corresponding cell and receives a paging message to determine whether data is coming in downlink. When the UE succeeds in an access procedure to the NR NB, a state of the UE is changed to a connection mode (RRC_CONNECTED), and the UE in the connection mode is capable of transmitting data to or receiving data from the NR NB.

The UE in the connection mode may command movement to allow transmission to or reception from another cell/NR NB, as movement is made to inside or outside the cell. Alternatively, adding or releasing of a serving cell may be indicated based on a channel measurement value from another cell/NR NB. To this end, the NR NB performs an RRC reconfiguration 2f-15. The NR NB may configure to indicate measurement (L3 measurement) for another cell via an RRC message. The measurement indication may include an object, for which the UE allows a measurement result to be reported to the NR NB, a condition, and parameters. Particularly, the measurement configuration value may include the following configuration values according to an object to be measured (RAT: radio access technology).
1. NR Measurement object
   - ARFCN of the reference SSB: frequency information of the reference SSB
   - CSI RS measurement configuration information
   - SSB measurement configuration information
      ▪ SCS of the reference SSB: subcarrier information of the reference SSB
      ▪ SMTC information
      ▪ SSB position information to be measured
   - PCI list: A physical cell index having a subcarrier configuration is explicitly indicated in a list.
   - A reference MO index for conditional intra-frequency L3 measurement
2. E-UTRA Measurement object
   - ARFCN of the reference SSB: frequency information of the reference SSB

In step 2f-15, the NR NB may add a serving cell configuration to the RRCReconfiguration message via SCellAddMod configuration. The configuration may include CSI-RS measurement configuration information of the serving cell, and the index of the reference SCell for conditional intra-frequency L3 measurement may be configured.

The UE having received the configuration information transmits/receives data to/from the NR NB 2f-25. The UE may transmit a confirmation message informing that the configuration information has been successfully received. The this end, an RRCReconfigurationComplete message may be used as in the LTE system.

The UE may perform, in step 2f-25, data transmission or reception with the NR NB, and may perform a measurement on a serving cell and object to be measured (an SSB-based measurement) in step 2f-30. The UE may measure a signal intensity of a downlink cell with respect to an object to be measured and the serving cell that were configured in step 2f-15. For example, the UE may measure a signal intensity with respect to a measurement object 1 2f-31, a measurement object 2 2f-32, and additional measurement objects, to a measurement object n 2f-33. In the steps above, the UE may measure a measurement result of a cell level and determine a reporting condition configured by the NR NB. The configuration condition may be differently configured depending on intra-frequency/inter-frequency. Particularly, in the case of inter-frequency channel measurement configuration, carrier frequency information indicating a corresponding frequency and subcarrier interval information are used, and whether to perform CSI measurement/SSB measurement for the SCell and whether to perform intra-frequency L3 measurement (SSB based) for a neighbor cell are determined based on a predetermined condition. CSI measurement is performed when the SCell in an A/Do state, and reporting of the measurement is also performed. If the SCell is in a De state, CSI measurement and reporting thereof are not performed. Whether to perform SSB measurement is determined according to a state of the SCell and the conditional intra-frequency L3 measurement configuration described in FIG. 2E.

A measurement report may be triggered according to a configured measurement value reporting condition, the UE may send a measurement report 2f-35 of a measurement result to the NR NB via an RRC message, and the NR NB may perform a handover 2f-40. For example, the UE may perform a handover procedure on the basis of the measurement value received from the UE. The measurement report may include a PCell measurement result value and a primary component carrier (PCC) neighbor cell measurement result. In addition, the measurement report may include a serving cell measurement result and a corresponding SCC neighbor cell measurement result with respect to an SCell that does not satisfy an intra-frequency measurement omission condition, but does not include a serving cell measurement result and a corresponding SCC neighbor cell measurement result with respect to an SCell that satisfies the condition. The conditional intra-frequency L3 measurement has been configured for the intra-frequency measurement omission condition, and the conditional intra-frequency L3 measurement is satisfied when a measurement result of the reference SCell is not available. Further, the measurement object may be other RATs (E-UTRA, etc.) as well as NR.

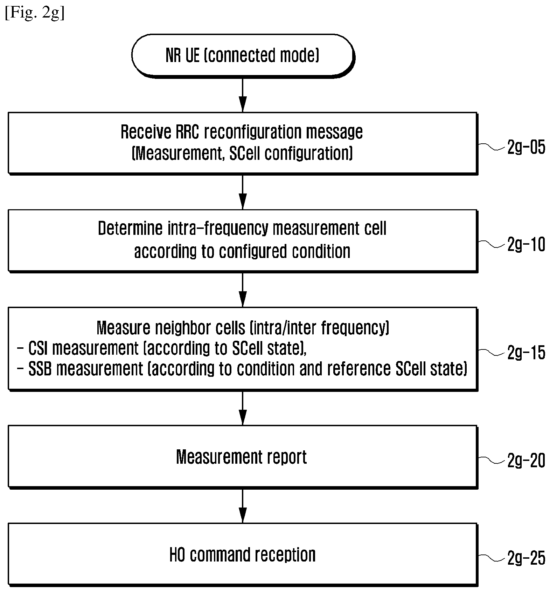

FIG. 2G is a diagram illustrating the overall operation of a UE, according to an embodiment.

The UE in the connection mode may command movement to allow transmission to or reception from another cell/NR NB, as movement is made to inside or outside the cell. To this end, the NR NB configures to indicate measurement (L3 measurement) for another cell via an RRC message. The UE receives the RRC reconfiguration message 2g-05. The measurement indication may include an object, for which the UE allows a measurement result to be reported to the NR NB, a condition, and parameters. Particularly, the measurement configuration value may include the following configuration values according to an object to be measured (RAT: radio access technology).

### 3. NR Measurement object

- ARFCN of the reference SSB: frequency information of the reference SSB
- CSI RS measurement configuration information
- SSB measurement configuration information
   ▪ SCS of the reference SSB: subcarrier information of the reference SSB
   ▪ SMTC information
   ▪ SSB position information to be measured
- PCI list: A physical cell index having a subcarrier configuration is explicitly indicated in a list.
- A reference MO index for conditional intra-frequency L3 measurement

### 4. E-UTRA Measurement object

- ARFCN of the reference SSB: frequency information of the reference SSB

The NR NB may add a serving cell configuration to the RRCReconfiguration message via SCellAddMod configuration. The configuration may include CSI-RS measurement configuration information of the serving cell, and the index of the reference SCell for conditional intra-frequency L3 measurement may be configured.

In step 2g-10, the UE determines an intra-frequency measurement cell according to the configured condition 2g-10. For example, the UE may determine whether to perform CSI measurement/SSB measurement for the SCell and whether to perform intra-frequency L3 measurement (SSB based) for a neighbor cell are determined based on a predetermined condition relating to intra-frequency L3 measurement omission configured by the NR NB. CSI measurement is performed when the SCell in the A/Do state, and reporting of the measurement is also performed. If the SCell is in the De state, CSI measurement and reporting thereof are not performed. Whether to perform SSB measurement is determined according to a state of the SCell and the conditional intra-frequency L3 measurement configuration described in FIG. 2E.

In step 2g-15, neighbor cells are measured. For example, a signal intensity of a downlink cell with respect to an object to be measured and the serving cell configured in the previous step may be measured. In the steps above, the UE measures a measurement result of a cell level and determines a reporting condition configured by the NR NB. The configuration condition may be differently configured depending on intra-frequency/inter-frequency. Particularly, in the case of inter-frequency channel measurement configuration, carrier frequency information indicating a corresponding frequency and subcarrier interval information are used. In accordance with a configured measurement value reporting condition, the UE may transmit a measurement report 2g-20 including a measurement result to the to the NR NB via an RRC message, and the UE may receive a handover command in step 2g-25. That is, the NR NB may perform a handover procedure on the basis of the measurement value received from the UE or may perform adding/releasing of the SCell, 2g-25.

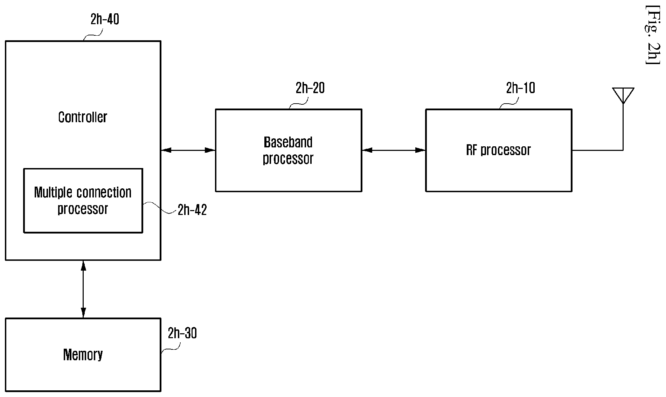

FIG. 2H is a block diagram illustrating an internal structure of a UE, to which an embodiment is applied.

Referring to FIG. 2H, the UE includes a radio frequency (RF) processor 2h-10, a baseband processor 2h-20, a memory 2h-30, and a controller 2h-40.

The RF processor 2h-10 performs a function for transmitting or receiving a signal through a wireless channel, such as band conversion and amplification of a signal. That is, the RF processor 2h-10 up-converts a baseband signal provided from the baseband processor 2h-20 into an RF band signal, transmits the converted RF band signal through an antenna, and then down-converts the RF band signal received through the antenna into a baseband signal. For example, the RF processor 2h-10 may include a transmission filter, a reception filter, an amplifier, a mixer, an oscillator, a digital-to-analog convertor (DAC), an analog-to-digital convertor (ADC), and the like. In FIG. 2H, only one antenna is illustrated, but in some embodiments, the UE may have a plurality of antennas. The RF processor 2h-10 may include a plurality of RF chains.

Moreover, the RF processor 2h-10 may perform beamforming. For the beamforming, the RF processor 2h-10 may adjust a phase and a size of each signal transmitted or received through a plurality of antennas or antenna elements. The RF processor 2h-10 may perform MIMO, and may receive multiple layers when performing an MIMO operation.

The baseband processor 2h-20 performs conversion between a baseband signal and a bitstream according to a physical layer specification of a system. For example, the baseband processor 2h-20, when transmitting data, generates complex symbols by encoding and modulating a transmission bitstream. The baseband processor 2h-20, when receiving data, reconstructs a reception bitstream through demodulation and decoding of a baseband signal provided from the RF processor 2h-10. For example, in an Orthogonal Frequency Division Multiplexing (OFDM) scheme, when data is transmitted, the baseband processor 2h-20 generates complex symbols by encoding and modulating a transmission bitstream, maps the complex symbols to subcarriers, and then configures OFDM symbols through an Inverse Fast Fourier Transform (IFFT) operation and a Cyclic Prefix (CP) insertion.

Further, when data is received, the baseband processor 2h-20 divides the baseband signal provided from the RF processor 2h-10 in the unit of OFDM symbols, reconstructs the signals mapped to the subcarriers through a Fast Fourier Transform (FFT) operation, and then reconstructs the reception bitstream through demodulation and decoding.

The baseband processor 2h-20 and the RF processor 2h-10 transmit and receive a signal as described above. Accordingly, the baseband processor 2h-20 and the RF processor 2h-10 together may be referred to as a transmission unit, a reception unit, and a transmission/reception unit, or a communication circuit. Moreover, one of the baseband processor 2h-20 and the RF processor 2h-10 may include a plurality of communication modules to support a plurality of different radio access technologies. Moreover, at least one of the baseband processor 2h-20 and the RF processor 2h-10 may include different communication modules to process signals of different frequency bands. For example, the different radio access technologies may include a wireless LAN (for example, IEEE 802.11), a cellular network (for example, LTE), and the like. Further, the different frequency bands may include a Super High Frequency (SHF) (i.e., 2.NRHz, NRhz) band and a millimeter (mm) wave (i.e., 60 GHz) band.

The memory 2h-30 stores data, such as a basic program, an application program, and configuration information for the operation of the UE. Particularly, the memory 2h-30 may store information related to a node performing wireless communication by using a second radio access technology. The memory 2h-30 provides stored data in response to a request of the controller 2h-40.

The controller 2h-40 controls overall operations of the UE. For example, the controller 2h-40 transmits or receives a signal through the baseband processor 2h-20 and the RF processor 2h-10. The controller 2h-40 records and reads data in the memory 2h-30. To this end, the controller 2h-40 may include at least one processor. For example, the controller 2h-40 may include a Communication Processor (CP) that performs control for communication and an Application Processor (AP) that controls a higher layer, such as an application program.

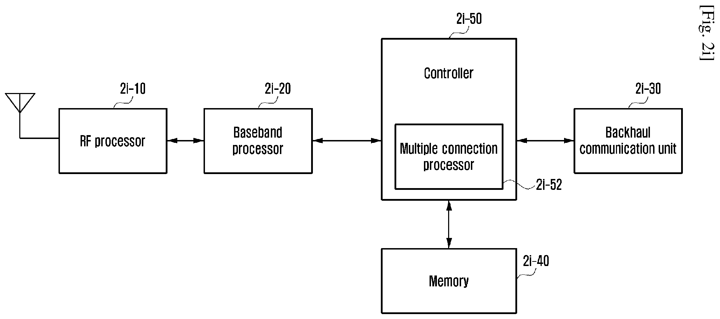

FIG. 2I is a block diagram illustrating a configuration of an NR NB according to the disclosure.

As illustrated in FIG. 2I, an NR NB includes an RF processor 2i-10, a baseband processor 2i-20, a backhaul communication circuit 2i-30, a memory 2i-40, and a controller 2i-50.

The RF processor 2i-10 performs a function for transmitting or receiving a signal through a wireless channel, such as band conversion and amplification of a signal. That is, the RF processor 2i-10 up-converts a baseband signal provided from the baseband processor 2i-20 into an RF band signal, transmits the converted RF band signal through an antenna, and then down-converts the RF band signal received through the antenna into a baseband signal. For example, the RF processor 2i-10 may include a transmission filter, a reception filter, an amplifier, a mixer, an oscillator, a DAC, an ADC, and the like. In FIG. 2I, only one antenna is illustrated, but in some embodiments, the NR NB according to the disclosure may include a plurality of antennas.

The RF processor 2i-10 may include a plurality of RF chains. Moreover, the RF processor 2i-10 may perform beamforming. For the beamforming, the RF processor 2i-10 may adjust a phase and a size of each of signals transmitted or received through the plurality of antennas or antenna elements. The RF processor 2i-10 may perform a downlink MIMO operation by transmitting one or more layers.

The baseband processor 2i-20 performs a function of conversion between a baseband signal and a bitstream according to a physical layer specification of a first radio access technology. For example, the baseband processor 2i-20, when transmitting data, generates complex symbols by encoding and modulating a transmission bitstream. The baseband processor 2i-20, when receiving data, reconstructs a reception bitstream through demodulation and decoding of a baseband signal provided from the RF processor 2i-10. For example, in an Orthogonal Frequency Division Multiplexing (OFDM) scheme, when data is transmitted, the baseband processor 2i-20 generates complex symbols by encoding and modulating a transmission bitstream, maps the complex symbols to subcarriers, and then configures OFDM symbols through an Inverse Fast Fourier Transform (IFFT) operation and a Cyclic Prefix (CP) insertion.

Further, when data is received, the baseband processor 2i-20 divides the baseband signal provided from the RF processor 2i-10 in the unit of OFDM symbols, reconstructs the signals mapped to the subcarriers through a Fast Fourier Transform (FFT) operation, and then reconstructs the reception bitstream through demodulation and decoding. The baseband processor 2i-20 and the RF processor 2i-10 transmit and receive a signal as described above. Accordingly, the baseband processor 2i-20 and the RF processor 2i-10 together may be referred to as a transmission unit, a reception unit, a transmission/reception unit, a communication circuit, or a wireless communication circuit.

The backhaul communication circuit 2i-30 provides an interface for performing communication with other nodes within the network. That is, the backhaul communication circuit 2i-30 converts a bitstream transmitted to another node in the main NR NB, such as an auxiliary NR NB and a core network, into a physical signal, and converts a physical signal received from the another node into a bitstream.

The memory 2i-40 stores data, such as a basic program for the operation of the main NR NB, an application program, and configuration information. Particularly, the storage 2i-40 may store information on a bearer assigned to a connected UE, a measurement result reported from the connected UE, and the like. The memory 2i-40 may store information serving as a criterion for determining whether to provide the UE with multiple connections or suspend the same. The memory 2i-40 provides stored data in response to a request of the controller 2i-50.

The controller 2i-50 controls overall operations of the NR NB. For example, the controller 2i-50 transmits or receives a signal through the baseband processor 2i-20 and the RF processor 2i-10 or the backhaul communication circuit 2i-30. The controller 2i-50 records and reads data in the memory 2i-40. To this end, the controller 2i-50 may include at least one processor.

## Claims

1. A method performed by a terminal (lj-01) in a wireless communication system, the method comprising:
receiving (lj-10), from a base station (lj-03) via a radio resource control, RRC, signaling, first configuration information associated with a discontinuous reception, DRX, and second configuration information associated with a transmission of an uplink signal;
receiving (lj-20), from the base station, control information for triggering the transmission of the uplink signal, during an active time according to a DRX operation based on the first configuration information;
identifying whether a time associated with the transmission of the uplink signal is within the active time, based on the second configuration information;
in case that the time is not within the active time, identifying whether a transmission type of the uplink signal is an aperiodic transmission or a semi-persistent transmission;
in case that the transmission type of the uplink signal is the aperiodic transmission, transmitting, to the base station, the uplink signal at the time other than the active time;
in case that the transmission type of the uplink signal is the semi-persistent transmission and the uplink signal includes channel state information, CSI, identifying whether the CSI triggered by the control information is to be transmitted on a physical uplink control channel, PUCCH, or a physical uplink shared channel, PUSCH; and
in case that the CSI is to be transmitted on the PUCCH, performing the transmission of the CSI on the PUCCH at the time other than the active time,
wherein, in case that the CSI is to be transmitted on the PUSCH, the transmission of the CSI is not performed at the time other than the active time, and
wherein the CSI to be transmitted on the PUCCH is triggered based on the control information being received via a medium access control, MAC, control element, CE, and the CSI to be transmitted on the PUSCH is triggered based on the control information being received via downlink control information, DCI.

2. The method of claim 1,
wherein the uplink signal further includes a sounding reference signal, SRS, and
wherein the second configuration information includes information on the transmission type of the uplink signal.

3. The method of claim 2,
wherein the control information is received via the MAC CE, in case that the transmission type of the SRS is the semi-persistent transmission, and
wherein control information is received via the DCI, in case that the transmission type of the SRS is the aperiodic transmission.

4. A method performed by a base station (lj-03) in a wireless communication system, the method comprising:
transmitting (lj-10), to a terminal (lj-01) via a radio resource control, RRC, signaling, first configuration information associated with a discontinuous reception, DRX, and second configuration information associated with a transmission of an uplink signal;
transmitting (lj-20), to the terminal, control information for triggering the transmission of the uplink signal;
receiving, from the terminal, the uplink signal based on a transmission type of the uplink signal being an aperiodic transmission at a time other than the an active time; and
receiving, from the terminal, channel state information, CSI, on a physical uplink control channel, PUCCH, at the time other than the active time based on the transmission type of the uplink signal being a semi-persistent transmission and the uplink signal including the CSI, wherein the CSI received on the PUCCH is triggered by the control information which is transmitted via a medium access control, MAC, control element, CE,
wherein, in case that the transmission type of the CSI is the semi-persistent transmission and the control information is transmitted via downlink control information, DCI, the CSI is not received from the terminal at the time other than the active time, and wherein the DCI triggers the CSI to be received on a physical uplink shared channel, PUSCH.

5. The method of claim 4,
wherein the uplink signal further includes a sounding reference signal, SRS, and
wherein the second configuration information includes information on the transmission type of the uplink signal.

6. The method of claim 5,
wherein the control information is received via the MAC CE, in case that the transmission type of the SRS is the semi-persistent transmission, and
wherein control information is received via the DCI, in case that the transmission type of the SRS is the aperiodic transmission.

7. A terminal (lj-01) in a wireless communication system, the terminal comprising:
a transceiver (1m-10); and
a controller (lm-40) configured to:
control the transceiver to receive (lj-10), from a base station (lj-03) via a radio resource control, RRC, signaling, first configuration information associated with a discontinuous reception, DRX, and second configuration information associated with a transmission of an uplink signal;
control the transceiver to receive (lj-20), from the base station, control information for triggering the transmission of the uplink signal, during an active time according to a DRX operation based on the first configuration information;
identify whether a time associated with the transmission of the uplink signal is within the active time, based on the second configuration information;
in case that the time is not within the active time, identify whether a transmission type of the uplink signal is an aperiodic transmission or a semi-persistent transmission;
in case that the transmission type of the uplink signal is the aperiodic transmission, control the transceiver to transmit, to the base station, the uplink signal at the time other than the active time;
in case that the transmission type of the uplink signal is the semi-persistent transmission and the uplink signal includes channel state information, CSI, identify whether the CSI triggered by the control information is to be transmitted on a physical uplink control channel, PUCCH, or a physical uplink shared channel, PUSCH; and
in case that the CSI is to be transmitted on the PUCCH, perform the transmission of the CSI on the PUCCH at the time other than the active time,
wherein, in case that the CSI is to be transmitted on the PUSCH, the transmission of the CSI is not performed at the time other than the active time, and
wherein the CSI to be transmitted on the PUCCH is triggered based on the control information being received via a medium access control, MAC, control element, CE, and the CSI to be transmitted on the PUSCH is triggered based on the control information being received via downlink control information, DCI.

8. The terminal of claim 7,
wherein the uplink signal further includes a sounding reference signal, SRS, and
wherein the second configuration information includes information on the transmission type of the uplink signal.

9. The terminal of claim 8,
wherein the control information is received via the MAC CE, in case that the transmission type of the SRS is the semi-persistent transmission, and
wherein control information is received via the DCI, in case that the transmission type of the SRS is the aperiodic transmission.

10. A base station (lj-03) in a wireless communication system, the base station comprising:
a transceiver (ln-10); and
a controller (ln-50) configured to:
control the transceiver to transmit (lj-10), to a terminal (lj-01) via a radio resource control, RRC, signaling, first configuration information associated with a discontinuous reception, DRX, and second configuration information associated with a transmission of an uplink signal;
control the transceiver to transmit (lj-20), to the terminal, control information for triggering the transmission of the uplink signal;
control the transceiver to receive, from the terminal, the uplink signal based on a transmission type of the uplink signal being an aperiodic transmission at a time other than the an active time; and
control the transceiver to receive, from the terminal, channel state information, CSI, on a physical uplink control channel, PUCCH, at the time other than the active time based on the transmission type of the uplink signal being a semi-persistent transmission and the uplink signal including the CSI, wherein the CSI received on the PUCCH is triggered by the control information which is transmitted via a medium access control, MAC, control element, CE,
wherein, in case that the transmission type of the CSI is the semi-persistent transmission and the control information is transmitted via downlink control information, DCI, the CSI is not received from the terminal at the time other than the active time, and wherein the DCI triggers the CSI to be received on a physical uplink shared channel, PUSCH.

11. The base station of claim 10,
wherein the uplink signal further includes a sounding reference signal, SRS,
wherein the second configuration information includes information on a transmission type for the SRS,
wherein the control information is received via the MAC CE, in case that the transmission type of the SRS is the semi-persistent transmission, and
wherein control information is received via the DCI, in case that the transmission type of the SRS is the aperiodic transmission.

## Patentansprüche

1. Verfahren, das von einem Endgerät (1j-01) in einem drahtlosen Kommunikationssystem ausgeführt wird, wobei das Verfahren Folgendes umfasst:
Empfangen (1j-10) erster Konfigurationsinformationen, die mit einem diskontinuierlichen Empfang, DRX, assoziiert sind, und zweiter Konfigurationsinformationen, die mit einer Übertragung eines Uplink-Signals assoziiert sind, über eine Radio Resource Control(RRC)-Signalisierung von einer Basisstation (1j-03);
Empfangen (1j-20) von Steuerungsinformationen zum Auslösen der Übertragung des Uplink-Signals während einer aktiven Zeit gemäß einem DRX-Vorgang basierend auf den ersten Konfigurationsinformationen von der Basisstation;
Identifizieren, ob eine mit der Übertragung des Uplink-Signals assoziierte Zeit innerhalb der aktiven Zeit liegt, basierend auf den zweiten Konfigurationsinformationen;
falls die Zeit nicht innerhalb der aktiven Zeit liegt, Identifizieren, ob ein Übertragungstyp des Uplink-Signals eine aperiodische Übertragung oder eine semipersistente Übertragung ist;
falls der Übertragungstyp des Uplink-Signals die aperiodische Übertragung ist, Übertragen des Uplink-Signals zu einer anderen Zeit als der aktiven Zeit an die Basisstation;
falls der Übertragungstyp des Uplink-Signals die semipersistente Übertragung ist und das Uplink-Signal Kanalzustandsinformationen, CSI, enthält, Identifizieren, ob die durch die Steuerungsinformationen ausgelösten CSI auf einem physikalischen Uplink-Steuerkanal, PUCCH, oder einem gemeinsam genutzten physikalischen Uplink-Kanal, PUSCH, übertragen werden sollen; und
falls die CSI auf dem PUCCH übertragen werden sollen, Ausführen der Übertragung der CSI auf dem PUCCH zu einer anderen Zeit als der aktiven Zeit,
wobei, falls die CSI auf dem PUSCH übertragen werden sollen, die Übertragung der CSI nicht zu einer anderen Zeit als der aktiven Zeit ausgeführt wird, und
wobei die auf dem PUCCH zu übertragenden CSI basierend auf den Steuerungsinformationen ausgelöst werden, die über ein Medium Access Control(MAC)-Steuerelement, CE, empfangen werden, und die auf dem PUSCH zu übertragenden CSI basierend auf den Steuerungsinformationen ausgelöst werden, die über Downlink-Steuerungsinformationen, DCI, empfangen werden.

2. Verfahren nach Anspruch 1,
wobei das Uplink-Signal ferner ein Sounding Reference Signal, SRS, enthält, und
wobei die zweiten Konfigurationsinformationen Informationen über den Übertragungstyp des Uplink-Signals enthalten.

3. Verfahren nach Anspruch 2,
wobei die Steuerungsinformationen über das MAC-CE empfangen werden, falls der Übertragungstyp des SRS die semipersistente Übertragung ist, und
wobei die Steuerungsinformationen über die DCI empfangen werden, falls der Übertragungstyp des SRS die aperiodische Übertragung ist.

4. Verfahren, das von einer Basisstation (1j-03) in einem drahtlosen Kommunikationssystem ausgeführt wird, wobei das Verfahren Folgendes umfasst:
Übertragen (1j-10) erster Konfigurationsinformationen, die mit einem diskontinuierlichen Empfang, DRX, assoziiert sind, und zweiter Konfigurationsinformationen, die mit einer Übertragung eines Uplink-Signals assoziiert sind, über eine Radio Resource Control(RRC)-Signalisierung an ein Endgerät (1j-01);
Übertragen (1j-20) der Steuerungsinformationen zum Auslösen der Übertragung des Uplink-Signals an das Endgerät;
Empfangen des Uplink-Signals von dem Endgerät basierend darauf, dass der Übertragungstyp des Uplink-Signals eine aperiodische Übertragung zu einer anderen Zeit als der aktiven Zeit ist; und
Empfangen von Kanalzustandsinformationen, CSI, auf einem physikalischen Uplink-Steuerkanal, PUCCH, zu einer anderen Zeit als der aktiven Zeit von dem Endgerät, basierend darauf, dass der Übertragungstyp des Uplink-Signals eine semipersistente Übertragung ist und das Uplink-Signal die CSI enthält, wobei die auf dem PUCCH empfangenen CSI durch die Steuerungsinformationen ausgelöst werden, die über ein Medium Access Control(MAC)-Steuerelement, CE, übertragen werden,
wobei, falls der Übertragungstyp der CSI die semipersistente Übertragung ist und die Steuerungsinformationen über Downlink-Steuerungsinformationen, DCI, übertragen werden, die CSI nicht zu einer anderen Zeit als der aktiven Zeit von dem Endgerät empfangen werden, und wobei die DCI den Empfang der CSI auf einem gemeinsam genutzten physikalischen Uplink-Kanal, PUSCH, auslösen.

5. Verfahren nach Anspruch 4,
wobei das Uplink-Signal ferner ein Sounding Reference Signal, SRS, enthält, und
wobei die zweiten Konfigurationsinformationen Informationen über den Übertragungstyp des Uplink-Signals enthalten.

6. Verfahren nach Anspruch 5,
wobei die Steuerungsinformationen über das MAC-CE empfangen werden, falls der Übertragungstyp des SRS die semipersistente Übertragung ist, und
wobei die Steuerungsinformationen über die DCI empfangen werden, falls der Übertragungstyp des SRS die aperiodische Übertragung ist.

7. Endgerät (1j-01) in einem drahtlosen Kommunikationssystem, wobei das Endgerät Folgendes umfasst:
einen Transceiver (1m-10); und
eine Steuerung (1m-40), die zu Folgendem konfiguriert ist:
Steuern des Transceivers, um über eine Radio Resource Control(RRC)-Signalisierung erste Konfigurationsinformationen, die mit einem diskontinuierlichen Empfang, DRX, assoziiert sind, und zweite Konfigurationsinformationen, die mit einer Übertragung eines Uplink-Signals assoziiert sind, von einer Basisstation (1j-03) zu empfangen (1j-10);
Steuern des Transceivers, um Steuerungsinformationen zum Auslösen der Übertragung des Uplink-Signals während einer aktiven Zeit gemäß einem DRX-Vorgang basierend auf den ersten Konfigurationsinformationen von der Basisstation zu empfangen (1j-20);
Identifizieren, ob eine mit der Übertragung des Uplink-Signals assoziierte Zeit innerhalb der aktiven Zeit liegt, basierend auf den zweiten Konfigurationsinformationen;
falls die Zeit nicht innerhalb der aktiven Zeit liegt, Identifizieren, ob ein Übertragungstyp des Uplink-Signals eine aperiodische Übertragung oder eine semipersistente Übertragung ist;
falls der Übertragungstyp des Uplink-Signals die aperiodische Übertragung ist, Steuern des Transceivers zum Übertragen des Uplink-Signals zu einer anderen Zeit als der aktiven Zeit an die Basisstation;
falls der Übertragungstyp des Uplink-Signals die semipersistente Übertragung ist und das Uplink-Signal Kanalzustandsinformationen, CSI, enthält, Identifizieren, ob die von den Steuerungsinformationen ausgelösten CSI auf einem physikalischen Uplink-Steuerkanal, PUCCH, oder einem gemeinsam genutzten physikalischen Uplink-Kanal, PUSCH, übertragen werden sollen; und
falls die CSI auf dem PUCCH übertragen werden sollen, Ausführen der Übertragung der CSI auf dem PUCCH zu einer anderen Zeit als der aktiven Zeit,
wobei, falls die CSI auf dem PUSCH übertragen werden sollen, die Übertragung der CSI nicht zu einer anderen Zeit als der aktiven Zeit ausgeführt wird, und
wobei die auf dem PUCCH zu übertragenden CSI basierend auf den über ein Medium Access Control(MAC)-Steuerelement, CE, empfangenen Steuerungsinformationen ausgelöst werden und die auf dem PUSCH zu übertragenden CSI basierend auf den über die Downlink-Steuerungsinformationen, DCI, empfangenen Steuerungsinformationen ausgelöst werden.

8. Endgerät nach Anspruch 7,
wobei das Uplink-Signal ferner ein Sounding Reference Signal, SRS, enthält, und
wobei die zweiten Konfigurationsinformationen Informationen über den Übertragungstyp des Uplink-Signals enthalten.

9. Endgerät nach Anspruch 8,
wobei die Steuerungsinformationen über das MAC-CE empfangen werden, falls der Übertragungstyp des SRS die semipersistente Übertragung ist, und
wobei die Steuerungsinformationen über die DCI empfangen werden, falls der Übertragungstyp des SRS die aperiodische Übertragung ist.

10. Basisstation (1j-03) in einem drahtlosen Kommunikationssystem, wobei die Basisstation Folgendes umfasst:
einen Transceiver (1n-10); und
eine Steuerung (1n-50), die zu Folgendem konfiguriert ist:
Steuern des Transceivers, um über eine Radio Resource Control(RRC)-Signalisierung erste Konfigurationsinformationen, die mit einem diskontinuierlichen Empfang, DRX, assoziiert sind, und zweite Konfigurationsinformationen, die mit einer Übertragung eines Uplink-Signals assoziiert sind, an ein Endgerät (1j-01) zu übertragen (1j-10);
Steuern des Transceivers, um Steuerungsinformationen zum Auslösen der Übertragung des Uplink-Signals an das Endgerät zu übertragen (1j-20);
Steuern des Transceivers, um das Uplink-Signal basierend darauf, dass ein Übertragungstyp des Uplink-Signals eine aperiodische Übertragung zu einer anderen Zeit als einer aktiven Zeit ist, von dem Endgerät zu empfangen; und
Steuern des Transceivers, um von dem Endgerät Kanalzustandsinformationen, CSI, auf einem physikalischen Uplink-Steuerkanal, PUCCH, zu einer anderen Zeit als der aktiven Zeit zu empfangen, basierend darauf, dass der Übertragungstyp des Uplink-Signals eine semipersistente Übertragung ist und das Uplink-Signal die CSI enthält, wobei die auf dem PUCCH empfangenen CSI durch die Steuerungsinformationen ausgelöst werden, die über ein Medium Access Control(MAC)-Steuerelement, CE, übertragen werden,
wobei, falls der Übertragungstyp der CSI die semipersistente Übertragung ist und die Steuerungsinformationen über Downlink-Steuerungsinformationen, DCI, übertragen werden, die CSI nicht zu einer anderen Zeit als der aktiven Zeit von dem Endgerät empfangen werden, und wobei die DCI den Empfang der CSI auf einem gemeinsam genutzten physikalischen Uplink-Kanal, PUSCH, auslösen.

11. Basisstation nach Anspruch 10,
wobei das Uplink-Signal ferner ein Sounding Reference Signal, SRS, enthält,
wobei die zweiten Konfigurationsinformationen Informationen über einen Übertragungstyp für das SRS enthalten,
wobei die Steuerungsinformationen über das MAC-CE empfangen werden, falls der Übertragungstyp des SRS die semipersistente Übertragung ist, und
wobei Steuerungsinformationen über die DCI empfangen werden, falls der Übertragungstyp des SRS die aperiodische Übertragung ist.

## Revendications

1. Procédé exécuté par un terminal (1j-01) dans un système de communication sans fil, le procédé comprenant :
recevoir (1j-10), d'une station de base (1j-03) via une signalisation de commande de ressources radio, RRC, des premières informations de configuration associées à une réception discontinue, DRX, et des deuxièmes informations de configuration associées à une transmission d'un signal de liaison montante ;
recevoir (1j-20), de la station de base, des informations de commande pour déclencher la transmission du signal de liaison montante, pendant un moment actif selon une opération DRX sur la base des premières informations de configuration ;
identifier si un moment associé à la transmission du signal de liaison montante est compris dans le moment actif, sur la base des deuxièmes informations de configuration ;
dans le cas où le moment n'est pas compris dans le moment actif, identifier si un type de transmission du signal de liaison montante est une transmission apériodique ou une transmission semi-persistante ;
dans le cas où le type de transmission du signal de liaison montante est la transmission apériodique, transmettre, à la station de base, le signal de liaison montante à un moment autre que le moment actif ;
dans le cas où le type de transmission du signal de liaison montante est la transmission semi-persistante et que le signal de liaison montante inclut des informations d'état de canal, CSI, identifier si les CSI déclenchées par les informations de commande doivent être transmises sur un canal de commande de liaison montante physique, PUCCH, ou un canal partagé de liaison montante physique, PUSCH ; et
dans le cas où les CSI doivent être transmises sur le PUCCH, exécuter la transmission des CSI sur le PUCCH à un moment autre que le moment actif,
où, dans le cas où les CSI doivent être transmises sur le PUSCH, la transmission des CSI n'est pas exécutée à un moment autre que le moment actif, et
où les CSI à transmettre sur le PUCCH sont déclenchées sur la base des informations de commande reçues via un élément de commande, CE, de contrôle d'accès au support, MAC, et les CSI à transmettre sur le PUSCH sont déclenchées sur la base des informations de commande étant reçues via des informations de commande de liaison descendante, DCI.

2. Procédé selon la revendication 1,
où le signal de liaison montante inclut en outre un signal de référence de sondage, SRS, et
où les deuxièmes informations de configuration incluent des informations sur le type de transmission du signal de liaison montante.

3. Procédé selon la revendication 2,
où les informations de commande sont reçues via le MAC CE, dans le cas où le type de transmission du SRS est la transmission semi-persistante, et
où des informations de commande sont reçues via les DCI, dans le cas où le type de transmission du SRS est la transmission apériodique.

4. Procédé exécuté par une station de base (1j-03) dans un système de communication sans fil, le procédé comprenant :
transmettre (1j-10), à un terminal (1j-01) via une signalisation de commande de ressources radio, RRC, des premières informations de configuration associées à une réception discontinue, DRX, et des deuxièmes informations de configuration associées à une transmission d'un signal de liaison montante ;
transmettre (1j-20), au terminal, des informations de commande pour déclencher la transmission du signal de liaison montante ;
recevoir, du terminal, le signal de liaison montante sur la base d'un type de transmission du signal de liaison montante étant une transmission apériodique à un moment autre que le moment actif ; et
recevoir, du terminal, des informations d'état de canal, CSI, sur un canal de commande de liaison montante physique, PUCCH, à un moment autre que le moment actif sur la base du type de transmission du signal de liaison montante étant une transmission semi-persistante et du signal de liaison montante incluant les CSI, où les CSI reçues sur le PUCCH sont déclenchées par les informations de commande qui sont transmises via un élément de commande, CE, de contrôle d'accès au support, MAC,
où, dans le cas où le type de transmission des CSI est la transmission semi-persistante et que les informations de commande sont transmises via des informations de commande de liaison descendante, DCI, les CSI ne sont pas reçues du terminal à un moment autre que le moment actif, et où les DCI déclenchent la réception des CSI sur un canal partagé de liaison montante physique, PUSCH.

5. Procédé selon la revendication 4,
où le signal de liaison montante inclut en outre un signal de référence de sondage, SRS, et
où les deuxièmes informations de configuration incluent des informations sur le type de transmission du signal de liaison montante.

6. Procédé selon la revendication 5,
où les informations de commande sont reçues via le MAC CE, dans le cas où le type de transmission du SRS est la transmission semi-persistante, et
où des informations de commande sont reçues via les DCI, dans le cas où le type de transmission du SRS est la transmission apériodique.

7. Terminal (1j-01) dans un système de communication sans fil, le terminal comprenant :
un émetteur-récepteur (1m-10) ; et
un contrôleur (1m-40) configuré pour :
commander à l'émetteur-récepteur de recevoir (1j-10), d'une station de base (1j-03) via une signalisation de commande de ressources radio, RRC, des premières informations de configuration associées à une réception discontinue, DRX, et des deuxièmes informations de configuration associées à une transmission d'un signal de liaison montante ;
commander à l'émetteur-récepteur de recevoir (1j-20), de la station de base, des informations de commande pour déclencher la transmission du signal de liaison montante, pendant un moment actif selon une opération DRX sur la base des premières informations de configuration ;
identifier si un moment associé à la transmission du signal de liaison montante est compris dans le moment actif, sur la base des deuxièmes informations de configuration ;
dans le cas où le moment n'est pas compris dans le moment actif, identifier si un type de transmission du signal de liaison montante est une transmission apériodique ou une transmission semi-persistante ;
dans le cas où le type de transmission du signal de liaison montante est la transmission apériodique, commander à l'émetteur-récepteur de transmettre, à la station de base, le signal de liaison montante à un moment autre que le moment actif ;
dans le cas où le type de transmission du signal de liaison montante est la transmission semi-persistante et que le signal de liaison montante inclut des informations d'état de canal, CSI, identifier si les CSI déclenchées par les informations de commande doivent être transmises sur un canal de commande de liaison montante physique, PUCCH, ou un canal partagé de liaison montante physique, PUSCH; et
dans le cas où les CSI doivent être transmises sur le PUCCH, exécuter la transmission des CSI sur le PUCCH à un moment autre que le moment actif,
où, dans le cas où les CSI doivent être transmises sur le PUSCH, la transmission des CSI n'est pas effectuée à un moment autre que le moment actif, et
où les CSI à transmettre sur le PUCCH sont déclenchées sur la base des informations de commande reçues via un élément de commande, CE, de contrôle d'accès au support, MAC, et les CSI à transmettre sur le PUSCH sont déclenchées sur la base des informations de commande étant reçues via des informations de commande de liaison descendante, DCI.

8. Terminal selon la revendication 7,
où le signal de liaison montante inclut en outre un signal de référence de sondage, SRS, et
où les deuxièmes informations de configuration incluent des informations sur le type de transmission du signal de liaison montante.

9. Terminal selon la revendication 8,
où les informations de commande sont reçues via le MAC CE, dans le cas où le type de transmission du SRS est la transmission semi-persistante, et
où des informations de commande sont reçues via les DCI, dans le cas où le type de transmission du SRS est la transmission apériodique.

10. Station de base (1j-03) dans un système de communication sans fil, la station de base comprenant :
un émetteur-récepteur (1n-10), et
un contrôleur (1n-50) configuré pour :
commander à l'émetteur-récepteur de transmettre (1j-10), à un terminal (1j-01) via une signalisation de commande de ressources radio, RRC, des premières informations de configuration associées à une réception discontinue, DRX, et des deuxièmes informations de configuration associées à une transmission d'un signal de liaison montante ;
commander à l'émetteur-récepteur de transmettre (1j-20), au terminal, des informations de commande pour déclencher la transmission du signal de liaison montante ;
commander à l'émetteur-récepteur de recevoir, du terminal, le signal de liaison montante sur la base d'un type de transmission du signal de liaison montante étant une transmission apériodique à un moment autre que le moment actif ; et
commander à l'émetteur-récepteur de recevoir, du terminal, des informations d'état de canal, CSI, sur un canal de commande de liaison montante physique, PUCCH, à un moment autre que le moment actif sur la base du type de transmission du signal de liaison montante étant une transmission semi-persistante et du signal de liaison montante incluant les CSI, où les CSI reçues sur le PUCCH sont déclenchées par les informations de commande qui sont transmises via un élément de commande, CE, de contrôle d'accès au support, MAC,
où, dans le cas où le type de transmission des CSI est la transmission semi-persistante et les informations de commande sont transmises via des informations de commande de liaison descendante, DCI, les CSI ne sont pas reçues du terminal à un moment autre que le moment actif, et où les DCI déclenchent la réception des CSI sur un canal partagé de liaison montante physique, PUSCH.

11. Station de base selon la revendication 10,
où le signal de liaison montante inclut en outre un signal de référence de sondage, SRS,
où les deuxièmes informations de configuration incluent des informations sur un type de transmission pour le SRS,
où les informations de commande sont reçues via le MAC CE, dans le cas où le type de transmission du SRS est la transmission semi-persistante, et
où des informations de commande sont reçues via les DCI, dans le cas où le type de transmission du SRS est la transmission apériodique.
